# EUROPEAN PATENT SPECIFICATION

(11) **EP 2 080 673 B1**
(45) Date of publication and mention of the grant of the patent: **12.03.2014**
(21) Application number: 07830662.8
(22) Date of filing: 26.10.2007
(51) Int. Cl.: B60R 16/033, B60R 16/02, B60R 16/04, H02J 7/00, H02J 9/00

(54) **VEHICLE POWER SUPPLY DEVICE**
ENERGIEVERSORGUNGSVORRICHTUNG FÜR FAHRZEUG
DISPOSITIF D'ALIMENTATION ÉLECTRIQUE DE VÉHICULE

(30) Priority: 02.11.2006 JP 2006298635; 22.11.2006 JP 2006315224; 15.12.2006 JP 2006338113
(43) Date of publication of application: 22.07.2009
(73) Proprietor: Panasonic Corporation, Kadoma-shi Osaka 571-8501 (JP)
(72) Inventor: MORITA, Kazuki, Osaka 540-6207 (JP); MITANI, Yohsuke, Osaka 540-6207 (JP); KOIKE, Takafumi, Osaka 540-6207 (JP); HAMAI, Hideaki, Osaka 540-6207 (JP)
(74) Representative: Eisenführ Speiser
(86) International application number: PCT/JP2007/070928
(87) International publication number: WO 2008/053808

(56) References cited:
- FR-A1- 2 847 039
- FR-A1- 2 851 699
- JP-A- 2002 238 181
- JP-A- 2002 238 181
- JP-A- 2004 260 903
- US-A- 5 596 269

## Description

### TECHNICAL FIELD

The present invention relates to a vehicle electric storage apparatus having an auxiliary power supply function to supply electric power from an electric storage unit at the time of, for example, voltage drop of a main power supply of a vehicle and to a vehicle power supply device or apparatus having the same electric storage apparatus.

### BACKGROUND ART

Recently, a vehicle having an idling stop function has been developed for exhaust reduction and fuel consumption reduction during the idling stage of an automobile (hereinafter referred to as a vehicle) from the viewpoint of environmental protection. In the idling stop car, the starter is operated when the idling stop is finished and the engine is restarted, and a large current consequently flows via the starter, by which the battery voltage temporarily drops. As a result, supplying of the electric powers to loads such as audio and car navigation systems are temporarily interrupted, and therefore, this led to such a problem that the music is interrupted and the car navigation destination setting is erased, resulting in the need of resetting.

In contrast to this, a vehicle power supply apparatus as an auxiliary power supply for supplying sufficient electric powers to the loads when the battery voltage temporarily drops was proposed in, for example, Patent Document 1. Fig. 20 is a block diagram showing a configuration of a first prior art vehicle power supply apparatus having the configuration.

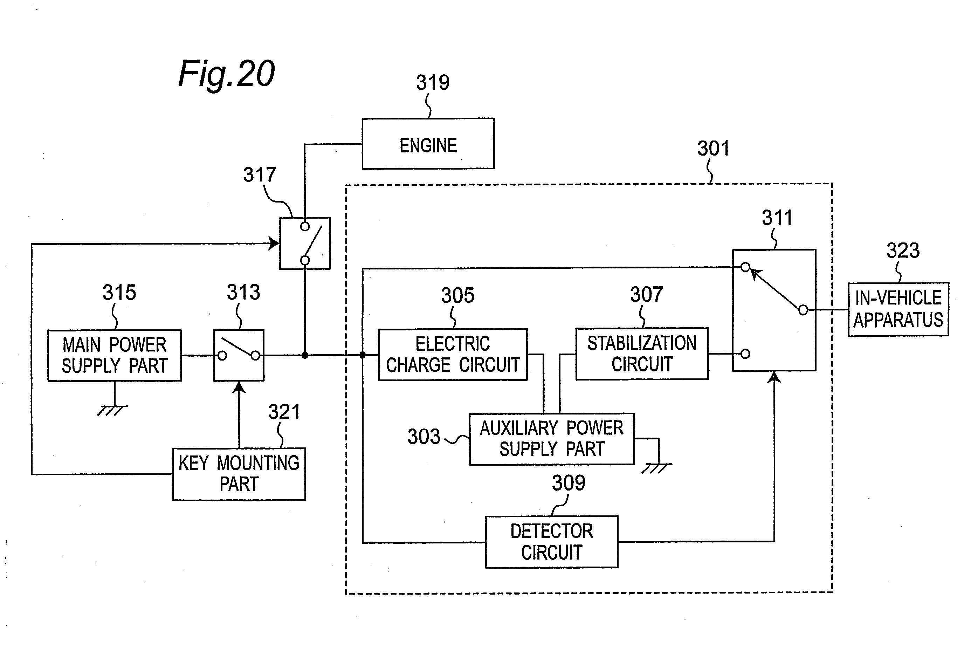

Referring to Fig. 20, an auxiliary power supply part 303 including an electric double layer capacitor for storing an auxiliary electric power is provided for a power supply circuit 301. An electric charge circuit 305 and a stabilization circuit 307 for outputting an electric power to the auxiliary power supply part 303 are connected to the auxiliary power supply part 303. A detector circuit 309 for detecting the voltage is connected to the input side of the electric charge circuit 305. Moreover, a power switchover part 311 for switchover whether or not to supply a power from the auxiliary power supply part 303 in accordance with the detection voltage of the detector circuit 309 is connected.

A main power supply part 315 including a battery is connected via a switch 313 to the input side of the electric power supply circuit 301, i.e., the input of the electric charge circuit 305 as described above. Moreover, one end of a switch 317 is connected between the switch 313 and the electric power supply circuit 301, and another end thereof is connected to a built-in starter of an engine 319. The switch 313 and the switch 317 are controlled to be turned on and off by a key mounting part 321. It is noted that the key mounting part 321 has four modes of a lock mode, an accessory mode, an ON mode, and a start mode. In the case of the lock mode, the switch 313 and the switch 317 are both turned off. In the case of the accessory mode and the ON mode, the switch 313 is turned on, and the switch 317 is turned off. In the case of the start mode, the switch 313 and the switch 317 are both turned on. Moreover, an in-vehicle apparatus 323 such as audio and car navigation systems is connected to the output side of the electric power supply circuit 301, i.e., the output of the electric power switchover part 311.

Next, the operation of the vehicle power supply apparatus of Fig. 20 will be described below. First of all, a key is inserted into the key mounting part 321, and the switch 313 is turned on when the accessory mode is established. As a result, the electric power from the main power supply part 315 is supplied to the electric charge circuit 305, the detector circuit 309 and the electric power switchover part 311. By this operation, the electric charge circuit 305 charges the auxiliary power supply part 303, and the electric power from the main power supply part 315 is supplied to the in-vehicle apparatus 323 since the electric power switchover part 311 selects the main power supply part 315 side as shown in Fig. 20, operating the audio and car navigation systems and the like.

In this state, when the key in the key mounting part 321 is made to enter the start mode to start the engine, the switch 317 is also turned on. As a result, the electric power from the main power supply part 315 is supplied to the built-in starter of the engine 319, and therefore, the engine is started. At this time, a large current flows to the starter, and therefore, the voltage of the main power supply part 315 largely drops in accordance with it. When the detector circuit 309 detects the change and detects that the voltage has become smaller than a predetermined reference value, the electric power switchover part 311 is switched over to the auxiliary power supply part 303 side. By this operation, the electric power is supplied from the auxiliary power supply part 303 to the in-vehicle apparatus 323 during the starter operation, and therefore, the in-vehicle apparatus 323 can operate continuously. Subsequently, the startup of the engine 319 is completed, and the switch 317 is turned off by making the key enter the ON mode. As a result, the voltage of the main power supply part 315 becomes larger than the predetermined reference value. Therefore, the detector circuit 309 detects the change and switches the electric power switchover part 311 over to the main power supply part 315 side. By this operation, the electric power is supplied from the main power supply part 315 to the in-vehicle apparatus 323.

Next, a case where an idling stop state is established will be described below. In the idling stop state, the voltage of the main power supply part 315 is larger than the predetermined reference value although the engine 319 is stopped, and therefore, the electric power switchover part 311 keeps selecting the main power supply part 315 side. As a result, the electric power from the main power supply part 315 is supplied to the in-vehicle apparatus 323. When the idling stop state is finished in this state and the engine 319 is restarted, the built-in starter of the engine 319 operates, and therefore, the voltage of the main power supply part 315 becomes smaller than the predetermined reference value. By this operation, the electric power switchover part 311 selects the auxiliary power supply part 303 side as described above, and the electric power from the auxiliary power supply part 303 is supplied to the in-vehicle apparatus 323. As a result, the in-vehicle apparatus 323 can operate continuously even in the starter operation stage after the idling stop is finished. By the operation as described above, a stable electric power is continuously supplied to the in-vehicle apparatus 323 also in the starter operation stage, and this can prevent the interruption of music, erase of the setting and so on can be avoided.

Next, another vehicle power supply apparatus will be described below. As described above, in a car on which the idling stop function is mounted, the voltage of the battery temporarily drops when the starter that intermittently consumes a large current in use is driven. As a result, the voltages supplied to the other loads such as the audio and car navigations systems also drop, and this leads to that there a possibility of an unstable state. Moreover, with regard to the braking of the car, there have been proposed various kinds of vehicle braking systems, which are shifted from the conventional mechanical hydraulic control to electric hydraulic control. However, it is possible that the vehicle braking system does not operate when the battery malfunctions.

An electric storage apparatus as an auxiliary power source for supplying sufficient electric power to the loads when the battery voltage temporarily drops and supplying electric power to the vehicle braking system when the battery malfunctions was proposed in, for example, Patent Document 2. It is noted that Patent Document 2 discloses a power supply backup unit to supply electric power to the electronic control circuit of the vehicle braking system particularly when the battery malfunctions among electric storage apparatuses.

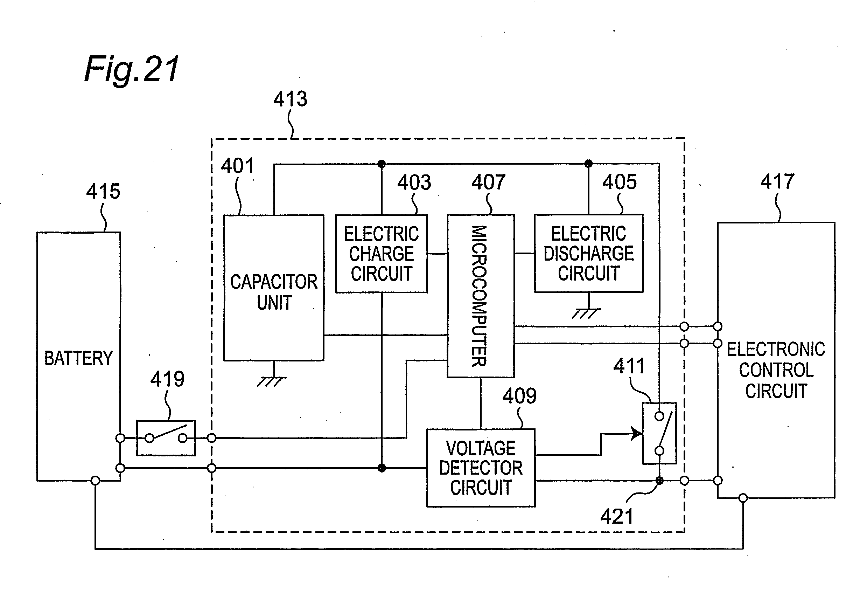

Fig. 21 is a block diagram showing a configuration of a vehicle power supply apparatus according to a second prior art having the configuration. Referring to Fig. 21, for example, an electric double layer capacitor is used for the electric storage unit to store electric power, and a capacitor unit 401 as an electric storage unit is constituted by connecting a plurality of the capacitors. An electric charge circuit 403 and an electric discharge circuit 405 for controlling electric charge and discharge are connected to the capacitor unit 401. The electric charge circuit 403 and the electric discharge circuit 405 are controlled by a microcomputer 407. A voltage detector circuit 409 for detecting the battery malfunction is connected to the microcomputer 407, and an FET switch 411 to supply the electric power from the capacitor unit 401 at the time of malfunction is connected to the voltage detector circuit 409. The electric storage apparatus 413 which operates as a power backup unit configured as above is connected between a battery 415 and an electronic control circuit 417, and is controlled to be started and stopped by an ignition switch 419.

Since the electronic control circuit 417 is a vehicle braking system, the electronic control circuit 417 must be continuously driven to secure safety even if the battery 415 malfunctions. Accordingly, the voltage detector circuit 409 copes with the malfunction of the battery 415 by turning on the FET switch 411 to supply the electric power from the capacitor unit 401 to the electronic control circuit 417 upon detecting the malfunction of the battery 415.

Furthermore, the other problems of the vehicle power supply apparatus of Fig. 21 will be described below. As described above, development of an idling stop car is expeditiously promoted from the viewpoint of the earth environment protection. However, when a large current is rapidly supplied at the engine startup timing after idling stop or for another reason, a voltage drop occurs in the battery used as the main power supply, and it is possible that stable voltage supply to the loads cannot be achieved. Accordingly, a vehicle power supply apparatus capable of compensating for the voltage even when the load rapidly changes by mounting an electric storage unit such as a mass-storage capacitor as an auxiliary power source besides the battery was proposed in, for example, Patent Document 2. The operation of the vehicle power supply apparatus of Fig. 21 at the startup timing will be described hereinbelow.

Referring to Fig. 21, when the ignition switch 419 is first made to be in the ON state, the electric power from the battery 415 is supplied to the entire vehicle. As a result, the microcomputer 407 operates. Although not shown in Fig. 21, the ignition switch 419 has an accessory state in which the electric power from the battery 415 is supplied only to the electronic control circuit 417 of the audio system and so on and a start state in which the engine is started besides the ON state. When the accessory state is established, the electric power from the battery 415 is supplied to the electronic control circuit 417 via the voltage detector circuit 409. By the above operation, the microcomputer 407 controls the electric charge circuit 403 to supply the electric power from the battery 415 to the capacitor unit 401 and performs the electric charge operation until the voltage reaches a specified voltage.

Next, the operation of supplying the electric power from the capacitor unit 401 to the electronic control circuit 417 at the time of the voltage drop of the battery 415 will be described below. In this case, the microcomputer 407 monitors the voltage Vb of the battery 415 by the voltage detector circuit 109. When the voltage Vb becomes equal to or smaller than a predetermined reference voltage (this is a voltage obtained by adding a margin for circuit variation and the load operation lower limit voltage and so on to the operation lower limit voltage of the microcomputer 407 that is the control circuit), the FET switch 411 is turned on. As a result, the electric power from the capacitor unit 401 is supplied to the electronic control circuit 417, and therefore, a stable power can be supplied to the electronic control circuit 417 even at the time of voltage drop of the battery 415.
Patent Document 1: Japanese patent laid-open publication No. JP-2002-064946-A; and
Patent Document 2: Japanese patent laid-open publication No. JP-2005-028908-A.

Document D1 (FR 2 851 699 A1) discloses an onboard power supply system including a power generator, a main battery, a sub-battery, and a control device. The main battery is charged by the power generator. The control device controls charge and discharge of the sub-battery according to at least one of a state of charge of the main battery and a state of power generation of the power generator.

### DISCLOSURE OF INVENTION

### PROBLEMS TO BE DISSOVED BY THE INVENTION

The problems of the above prior art vehicle power supply apparatuses will be described below.

According to the first prior art vehicle power supply apparatus of Fig. 20, the in-vehicle apparatus 323 can be continuously driven veraciously even when the voltage of the main power supply part 315 drops due to the starter operation. However, if the electric power from the auxiliary power supply part 303 is consistently continuously supplied to the in-vehicle apparatus 323 in the starter operation, there have been the following problems. According to the configuration of the first prior art, the in-vehicle apparatus 323 continuously operate even at the time of the first vehicle startup (initial startup) from the vehicle nonuse state by making the key of the key mounting part 321 enter the start mode. However, for example, when the key quickly enters the start mode immediately after entering the accessory mode, electric charge of the auxiliary power supply part 303 is insufficiently performed, and it is sometimes the case where the operation of the in-vehicle apparatus 323 cannot be continued. That is, the in-vehicle apparatus 323 operates or does not operate depending on the state of charge of the auxiliary power supply part 303. Accordingly, there has been such a problem that the driver possibly misconceives the electric power system, the in-vehicle apparatus 323 and the like as if they were in trouble.

Moreover, also when the use of the vehicle is ended (in the vehicle nonuse state) by making the key enter the lock mode in the prior art configuration, the operation of continuously supplying the electric power from the auxiliary power supply part 303 to the in-vehicle apparatus 323 is supposed as a consequence of recognizing the voltage drop of the main power supply part 315 by the detector circuit 309 as the result that the switch 313 is turned off. However, the above operation leads to the continuous operation of the in-vehicle apparatus 323 despite that the key has entered the lock mode. Accordingly, there has been such a problem that the driver possibly misconceives the electric power system, the in-vehicle apparatus 323 and the like as if they were in trouble.

Moreover, according to the second prior art vehicle power supply apparatus of Fig. 21, the electronic control circuit 417 can be continuously driven veraciously when the temporary battery 415 malfunctions, and therefore, the safety of the vehicle braking system can be secured. However, when such an electric storage apparatus is applied to, for example, an application for supplying the electric power to the load when the voltage of the battery 415 temporarily drops due to the driving of the starter as described above, there have been the following problems. That is, when the electric storage apparatus is used for the auxiliary power supply of the vehicle braking system in a manner similar to that of the conventional case, it is proper to supply the electric power stored in the capacitor unit 401 to the vehicle braking system until the vehicle stops when the battery 415 malfunctions. Therefore, the electric charge and discharge of the capacitor unit 401 has been once every use of the vehicle.

On the other hand, in the case of an application such that the voltage drop of the battery intermittently occurs during the use of the vehicle in a manner similar to that of the idling stop car, the process of supplying the electric power to the loads as occasion demands and thereafter electrically charging the capacitor unit 401 is to be carried out many times. Therefore, the operation of the FET switch 411 is to be repetitively carried out. Accordingly, there has been such a problem that failure detection for securing reliable operation is necessary. Moreover, although it is not shown in Fig. 21, in order to prevent the reverse flow of the current from the battery 415 when a current is supplied from the capacitor unit 401, a diode is generally connected between the connection point 421 of the voltage detector circuit 409 and the electronic control circuit 417 and the FET switch 411 in a manner that its cathode is located on the connection point 41 side. Accordingly, there has been such a problem that failure detection of the diode is also necessary.

Further, in the second prior art vehicle power supply apparatus of Fig. 21, supplying of the electric power from the capacitor unit 401 to the electronic control circuit 417 can be continuously performed certainly even when the voltage of the battery 415 drops. However, in the vehicle power supply apparatus of Fig. 21, the source of power supply to the microcomputer 407 is turned only the battery 415 via the ignition switch 419. Accordingly, there has been a possibility that supplying of the electric power to the microcomputer 407 cannot be performed when the voltage of the battery 415 drops.

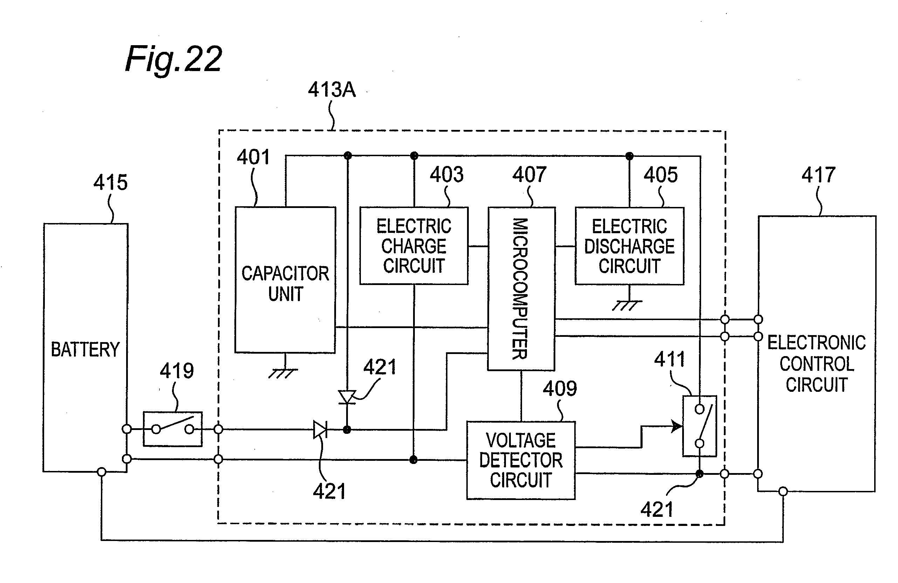

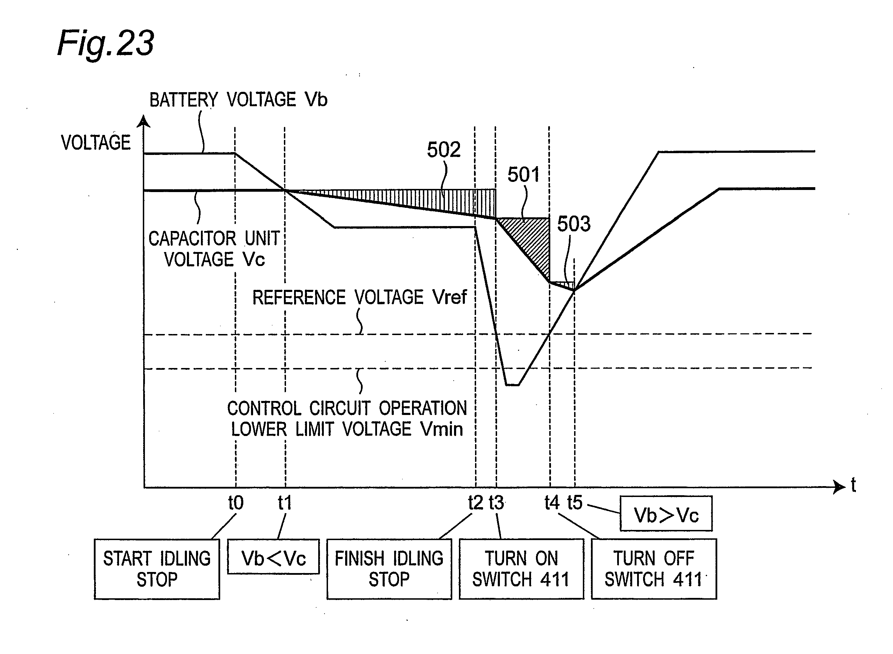

In order to avoid this occurrence, a vehicle power supply apparatus is proposed as follows. Fig. 22 is a block diagram showing a configuration of a vehicle power supply apparatus having an electric storage apparatus 413A according to a third prior art. Fig. 23 shows an operation of the vehicle power supply apparatus of Fig. 22, and a timing chart showing changes in voltages Vb, Vc, Vref and Vmin.

As shown in, for example, Fig. 22, it is preferable to incorporate wiring to supply the electric power from the capacitor unit 401 to the microcomputer 407 and provide two diodes 421 for the prevention of a reverse flow of the current. With this arrangement, one of the battery 415 and the capacitor unit 401 having a higher voltage serves as a power supply source of the microcomputer 407. Therefore, the microcomputer 407 can continuously be operated by the electric power from the capacitor unit 401 also in the case of the voltage drop of the battery 415.

However, when the voltage Vb of the battery 415 is larger than a reference voltage and the voltage Vc of the capacitor unit 401 is larger than the voltage Vb of the battery 415 even if the voltage drop of the battery 415 occurs, the microcomputer 407 operates on the electric power not from the battery from 415 but from the capacitor unit 401. As a result, the electric power energy of the electric charge stored in the capacitor unit 401 is unnecessarily taken out despite that the microcomputer 407 can be operated by the battery 415, and therefore, wasteful electric power consumption occurs.

The details of the operation will be described below with reference to Fig. 23. In Fig. 23, the horizontal axis represents time, and the vertical axis represents voltage. Moreover, the reference numeral 501 represents the electric power supplied from the capacitor unit 401 to the accessory loads and the microcomputer 407, and the numerals 502 and 503 represent the electric power supplied from the capacitor unit 401 to only the microcomputer 407.

Referring to Fig. 23, an ordinary vehicle use state is assumed to be until the timing t0. At this time, the engine of the vehicle is operating, and therefore, an alternator (not shown) is also operating. The voltage Vb of the battery 415 is larger than the voltage purely owned by the battery 415 when the alternator is not started and supplied to the electric storage apparatus 105. In this state, the voltage Vb is larger than the voltage Vc of the capacitor unit 401. Therefore, the electric power from the battery 415 is supplied to the microcomputer 407 while the engine is operating.

Next, it is assumed that the idling stop is started at the timing t0. When the engine consequently stops, the alternator also stops. Therefore, the voltage Vb of the battery 415 gradually drops to the voltage purely owned by the battery 415 depending on the conditions of the peripheral loads (not shown). Therefore, when reaching the timing t1, the voltage Vb of the battery 415 drops below the voltage Vc of the capacitor unit 401. As a result, one of the battery 415 and the capacitor unit 401 having a higher voltage serves as supplying of the electric power source of the microcomputer 407. Therefore, subsequent to the timing t1, the electric power from the capacitor unit 401 is supplied to the microcomputer 407. In accordance with this, the voltage Vc of the capacitor unit 401 gradually drops.

Subsequently, when the idling stop is finished and the engine is started at the timing t2, the voltage Vb of the battery 415 starts dropping rapidly. Since the magnitude relation between the voltages Vb and Vc does not change during this interval, the electric power to the capacitor unit 401 is continuously supplied to the microcomputer 407. Further, when the voltage Vb of the battery 415 drops and becomes equal to or smaller than the reference voltage at the timing t3, the microcomputer 407 turns on the FET switch 411. By this operation, the electric power is supplied also to the electronic control circuit 417.

Next, when the voltage Vb of the battery 415 rises also with the start of the alternator upon completion of engine start and becomes equal to or larger than the reference voltage at the timing t4, the microcomputer 407 turns off the FET switch 411. By this operation, the electric power supply source of the electronic control circuit 417 changes to the battery 415. However, since the voltage Vc of the capacitor unit 401 is larger than the voltage Vb of the battery 415 at this timing, the electric power is supplied by the diode 421 from the capacitor unit 401 to the microcomputer 407. Further, when the voltage Vb of the battery 415 rises and exceeds the voltage Vc of the capacitor unit 401 at the timing t5, the electric power supply source of the microcomputer 407 changes to the battery 415.

In the above operation, the electric power is supplied from the capacitor unit 401 despite that the voltage Vb of the battery 415 is larger than the reference voltage during the timing t1 to t3 and the timing t4 to t5 and the microcomputer 407 can be operated by the battery 415. This led to such a problem that the electric power energy of wasteful charge (This means the electric power energy of the areas of the hatching portions 502 and 503 of Fig. 23) is disadvantageously consumed.

The first object of the present invention is to solve the above problems and provide a highly reliable vehicle power supply apparatus capable of reducing the possibility of misconception of failures at the initial startup timing of a vehicle and in a vehicle nonuse state.

In addition, the second object of the present invention is to solve the above problems and provide a highly reliable vehicle electric storage apparatus capable of detecting the failures of a switch and a diode.

Further, the third object of the present invention is to solve the above problems and provide a vehicle electric storage apparatus capable of reducing wasteful electric power consumption.

### MEANS FOR DISSOVING THE PROBLEMS

The invention is defined by the features of independent claim 1. Preferred embodiments are defined in the dependent claims.

According to the first aspect of the present invention, there is provided a vehicle power supply apparatus including a main power supply, an electric storage unit, a load storage unit, and control means. The electric storage unit stores electric power from the main power supply, and the load is connected to the main power supply and the electric storage unit. The control means controls the electric storage unit to supply the electric power from the electric storage unit to the load when a voltage (Vb) of the main power supply becomes equal to or smaller than a predetermined threshold value. The control means controls the electric storage unit to inhibit supplying of the electric power from the electric storage unit to the load, at least at the following times: (a) when the vehicle is not in use, and (b) when the electric power is supplied from the main power supply to a starter to start an engine of the vehicle, and no electric power is supplied from the main power supply to the load.

In the above-mentioned vehicle power supply apparatus, the control means controls the electric storage unit to inhibit supplying of the electric power from the electric storage unit to the load when an operation state of the vehicle power supply apparatus initially changes from the vehicle nonuse state when the vehicle is not in use to a vehicle startup state.

In addition, the above-mentioned vehicle power supply apparatus further includes a vehicle power switch apparatus for switching over a destination of supply of the electric power from the main power supply. The vehicle power switch apparatus is configured to operate at the following operation modes:
(a) a lock mode in which supplying of the electric power from the main power supply to the electric storage unit and the load is stopped;
(b) an accessory mode in which the electric power is supplied from the main power supply to the load;
(c) an ON mode in which the electric power is supplied from the main power supply to the electric storage apparatus and the load; and
(d) a start mode in which the electric power is supplied from the main power supply to the starter.

The vehicle power switch apparatus includes an accessory mode switch for the accessory mode, and the accessory mode switch is turned on when the operation mode of the vehicle power switch apparatus is switched over from the lock mode to the accessory mode and the accessory mode switch is turned off during a time interval when the operation mode of the vehicle power switch apparatus is switched over to the start mode. The control means detects that the operation state of the vehicle power supply apparatus initially changes from the vehicle nonuse state to the vehicle startup state when the control means detects a voltage (Vac) of the load supplied from the main power supply via the accessory mode switch and the voltage (Vac) of the accessory load becomes equal to or larger than the voltage (Vb) of the main power supply.

Further, in the above-mentioned vehicle power supply apparatus, the control means outputs a predetermined malfunction signal when the voltage (Vac) of the load is substantially zero for a time interval that is equal to or larger than a predetermined time interval.

Still further, in the above-mentioned vehicle power supply apparatus, the control means controls the electric storage unit to inhibit supplying of the electric power from the electric storage unit to the load when the vehicle power switch apparatus is switched over from the ON mode to the accessory mode or switched over from the ON mode to the lock mode.

Still further, in the above-mentioned vehicle power supply apparatus, the control means outputs a disconnection signal when the supply voltage to the load is substantially zero for a time interval that is equal to or larger than a predetermined time interval.

According to the second aspect of the present invention, there is provided a vehicle power supply as defined in the first aspect of the present invention, further comprising, an electric charge circuit, a first voltage detector circuit, a switch, and a diode. The electric charge circuit is connected between the main power supply and the electric storage unit, and the electric charge circuit controls electric charge from the main power supply to the electric storage unit while detecting a voltage (Vc) of the electric storage unit. The first voltage detector circuit is connected between the main power supply and the load, and the first voltage detector circuit detects a voltage (Vb) of the main power supply. The switch is connected between the electric storage unit and the load, and the switch switches over whether or not to output the electric power from the electric storage unit to the load. The diode has a cathode connected to a first connection point located between the first voltage detector circuit and the load, and an anode connected to the switch. The electric storage apparatus further includes a second voltage detector circuit, and control means. The second voltage detector circuit is connected to a second connection point located between the switch and the diode, and the second voltage detector circuit detects a voltage (Vs) at the second connection point. The further control means is connected to the electric charge circuit, the first voltage detector circuit, the switch and the second voltage detector circuit, and the further control means controls the switch. The further control means performs failure detection of the switch by turning on and off the switch, under a predetermined condition, based on the voltage (Vc) of the electric storage unit which is detected by the electric charge circuit, and the voltage (Vs) at the second connection point which is detected by the second voltage detector circuit when the switch is turned on and off. The further control means judges and detects an abnormal heat generation state of the diode when the voltage (Vs) at the second connection point becomes equal to or larger than an operating limit value of the diode when the switch is turned off.

In the above-mentioned vehicle power supply, the predetermined condition is such a case that is applied once for a time interval from a timing when the operation state of the electric storage apparatus changes from a nonuse state to a use state until a timing of full electric charge upon electrically charging the electric storage unit.

In addition, in the above-mentioned vehicle power supply, the further control means controls the electric storage unit to stop the electric charge and discharge of the electric storage unit upon detecting an abnormal heat generation state of the diode, and to restart the electric charge and discharge of the electric storage unit when the voltage (Vs) at the second connection point becomes equal to or smaller than an operable value of the diode.

Further, in the above-mentioned vehicle power supply, the operable value of the diode is set to a value smaller than the operating limit value.

Still further, the above-mentioned vehicle power supply further includes cooling means for cooling the diode. The further control means controls the electric storage unit, to operate the cooling means when the abnormal heat generation state of the diode is detected, and to stop the operation of the cooling means when the voltage (Vs) at the second connection point becomes equal to or smaller than the operable value of the diode.

In addition, in the above-mentioned vehicle power supply, the operable value of the diode is set to a value smaller than the operating limit value. The further control means judges that the switch suffers a short-circuit failure when the voltage (Vs) at the second connection point becomes equal to or larger than the operable value during the operation of the cooling means.

Further, in the above-mentioned vehicle power supply, the cooling means is a fan.

According to the third aspect of the present invention, there is provided a vehicle power supply as defined in the first aspect of the present invention, further comprising, an electric charge unit, a first voltage detector circuit, a switch, and a diode. The electric charge circuit is connected between the main power supply and the electric storage unit, and the electric charge circuit controls electric charge from the main power supply to the electric storage unit while detecting a voltage (Vc) of the electric storage unit. The first voltage detector circuit is connected between the main power supply and the load, and the first voltage detector circuit detects a voltage (Vb) of the main power supply. The switch is connected between the electric storage unit and the load, and the switch switches over whether or not to output the electric power from the electric storage unit to the load. The diode has a cathode connected to a first connection point located between the first voltage detector circuit and the load, and an anode connected to the switch. The electric storage apparatus further includes a second voltage detector circuit, and control means. The third voltage detector circuit is connected to the first connection point, and the third voltage detector circuit detects a voltage (Vd) at the first connection point. The further control means is connected to the electric charge circuit, the first voltage detector circuit, the switch and the third voltage detector circuit, and the further control means controls the switch. The further control means performs failure detection of at least one of the switch and the diode by turning on the switch, based on the voltage (Vc) of the electric storage unit which is detected by the electric charge circuit and the voltage (Vd) at the first connection point which is detected by the second voltage detector circuit, when electric discharge from the electric storage unit to the load is performed via the switch.

The above-mentioned vehicle power supply further includes a second voltage detector circuit. The second voltage detector circuit is connected to a second connection point located between the switch and the diode, and the second voltage detector circuit detecting a voltage (Vs) at the second connection point. The further control means performs failure detection of the switch and the diode by turning on the switch, based on the voltage (Vc) of the electric storage unit which is detected by the electric charge circuit, the voltage (Vd) at the first connection point which is detected by the third voltage detector circuit, and the voltage (Vs) at the second connection point which is detected by the second voltage detector circuit, when electric discharge from the electric storage unit to the load is performed via the switch.

According to the fourth aspect of the present invention, there is provided a vehicle power supply as defined in the first aspect of the present invention, further comprising a switch, a voltage detector circuit, control means, and a first diode. The switch is connected between the electric storage unit and the load. The voltage detector circuit is connected to the main power supply, and the voltage detector circuit detecting a voltage (Vb) of the main power supply. The further control means controls the switch, based on the voltage (Vb) of the main power supply which is detected by the voltage detector circuit. The first diode is connected between the main power supply and a power supply terminal of the further control means, and the first diode supplying the electric power from the main power supply to the further control means. The electric storage apparatus further includes a second diode. The second diode is connected between the power supply terminal of the further control means and the load, and the second diode supplies the electric power from the electric storage unit to the further control means when the switch is turned on. The further control means controls the switch, to supply the electric power from the electric storage unit to the load, by turning on the switch when the voltage (Vb) of the main power supply which is detected by the voltage detector circuit becomes smaller than a predetermined reference voltage (Vref), and to stop the supply of the electric power from the electric storage unit to the load by turning off the switch when the voltage (Vb) of the main power supply which is detected by the voltage detector circuit becomes equal to or larger than the reference voltage (Vref).

In the above-mentioned vehicle power supply, the reference voltage (Vref) includes a first reference voltage (Vref1) and a second reference voltage (Vref2) smaller than the first reference voltage. The further control means controls the switch, to supply the electric power from the electric storage unit to the load by turning on the switch when the voltage (Vb) of the main power supply which is detected by the voltage detector circuit becomes smaller than the predetermined reference voltage (Vref2), and to stop supplying of the electric power from the electric storage unit to the load by turning off the switch when the voltage (Vb) of the main power supply which is detected by the voltage detector circuit becomes equal to or larger than the reference voltage (Vref1).

### EFFECTS OF THE INVENTION

According to the vehicle power supply apparatus of the first aspect of the present invention, any electric power is not supplied from the electric storage unit to the load in the vehicle nonuse state and when the electric power is supplied from the main power supply to the starter to start the engine of the vehicle and when the electric power is not supplied from the main power supply to the load or in the vehicle nonuse state and when an operation state of the vehicle power supply apparatus first changes from the vehicle nonuse state to the vehicle startup state. Therefore, supplying of the electric power to the in-vehicle apparatus 323 or the accessory load 15 is stopped when the key is made to enter the start mode or the lock mode. As a result, the in-vehicle apparatus 323 or the accessory load 15 is to undergo the startup and ending operation equivalent to those of a general vehicle even if the vehicle is the idling stop car, and therefore, the possibility of the driver's misconception of failures in using the vehicle can be reduced. Therefore, a highly reliable vehicle power supply apparatus can be provided.

In addition, according to the electric storage apparatus of the second aspect of the present invention, the voltages Vc and Vs at both terminals of the switch when the switch is turned on and off under a predetermined condition are detected by the first voltage detector circuit provided to detect the voltage Vs between the switch and the diode, and failure detection of the switch can be performed on this basis. Moreover, the voltage at the second connection point 119 due to the leakage current of the diode is detected by the second voltage detector circuit, and a failure due to the abnormal heat generation of the diode can be detected on this basis. Therefore, a highly reliable electric storage apparatus can be provided.

Further, according to the electric storage apparatus of the third aspect of the present invention, by detecting the voltage Vc of the electric storage unit and the voltage Vd at the second connection point 119 while the electric storage unit is being discharged and judging whether or not the voltage difference between both of them is within the normal permissible range, the failure of at least one of the switch and the diode can be detected. Therefore, a highly reliable electric storage apparatus can be provided.

Furthermore, according to the electric storage apparatus of the fourth aspect of the present invention, control is performed so that the electric power from the electric storage unit is supplied to the load by turning on the switch when the voltage (Vb) of the main power supply which is detected by the voltage detector circuit becomes smaller than the predetermined reference voltage (Vref) and the supply of the electric power from the electric storage unit to the load is stopped by turning off the switch when the voltage (Vb) of the main power supply which is detected by the voltage detector circuit becomes equal to or larger than the reference voltage (Vref). By this operation, wasteful electric power consumption from the electric storage unit can be reduced.

### BRIEF DESCRIPTION OF DRAWINGS

Fig. 1 is a block diagram showing a configuration of a vehicle power supply apparatus having an electric storage apparatus 13 according to a first preferred embodiment of the present invention;
Fig. 2 is a circuit diagram showing a detailed configuration of the vehicle power switch 19 of Fig. 1;
Fig. 3 is a flow chart showing a first control processing executed by the vehicle control circuit 27 of Fig. 1;
Fig. 4 is a flow chart showing the first control processing executed by the control circuit 43 of the electric storage apparatus 13 of Fig. 1;
Fig. 5 is a flow chart showing a second control processing executed by the vehicle control circuit 27 of Fig. 1;
Fig. 6 is a flow chart showing a third control processing executed by the vehicle control circuit 27 of Fig. 1;
Fig. 7 is a flow chart showing a fourth control processing executed by the vehicle control circuit 27 of Fig. 1;
Fig. 8 is a flow chart showing the second control processing executed by the control circuit 43 of the electric storage apparatus 13 of Fig. 1;
Fig. 9 shows an operation of the vehicle power supply apparatus of the vehicle power supply apparatus of Fig. 1 and a vehicle power supply apparatus according to its modified preferred embodiment, and a timing chart showing changes of switches 19a, 19b and 19c and a switch 35;
Fig. 10 is a block diagram showing a configuration of a vehicle power supply apparatus having an electric storage apparatus 13A according to a second preferred embodiment of the present invention;
Fig. 11 is a flow chart showing a failure detection processing executed by the control circuit 43A of Fig. 10;
Fig. 12 is a block diagram showing a configuration of a vehicle power supply apparatus having an electric storage apparatus 13B according to a third preferred embodiment of the present invention;
Fig. 13 is a block diagram showing a configuration of a vehicle power supply apparatus having an electric storage apparatus 13C according to a fourth preferred embodiment of the present invention;
Fig. 14 is a flow chart showing a failure detection processing executed by the control circuit 43C of Fig. 13;
Fig. 15 is a block diagram showing a configuration of a vehicle power supply apparatus having an electric storage apparatus 13D according to a fifth preferred embodiment of the present invention;
Fig. 16 is a flow chart showing a failure detection processing executed by the control circuit 43D of Fig. 15;
Fig. 17 is a block diagram showing a configuration of a vehicle power supply apparatus having an electric storage apparatus 13E according to a sixth preferred embodiment of the present invention;
Fig. 18 shows an operation of the vehicle power supply apparatus of Fig. 17, and a timing chart showing changes in voltages Vb, Vc, Vref and Vmin;
Fig. 19 shows an operation of a modified preferred embodiment of the vehicle power supply apparatus of Fig. 17, and a timing chart showing changes in voltages Vb, Vc, Vref1, Vref2 and Vmin;
Fig. 20 is a block diagram showing a configuration of a vehicle power supply apparatus according to a first prior art;
Fig. 21 is a block diagram showing a configuration of a vehicle power supply apparatus according to a second prior art;
Fig. 22 is a block diagram showing a configuration of a vehicle power supply apparatus according to a third prior art; and
Fig. 23 shows an operation of the vehicle power supply apparatus of Fig. 22, and a timing chart showing changes in the voltages Vb, Vc, Vref and Vmin.

### DESCRIPTION OF REFERENCE NUMERALS

11 ... Main power supply;
13, 13A, 13B, 13C, 13D, and 13E ... Electric storage apparatus;
15 ... Accessory load;
19 ... Vehicle power switch;
19a, 19b, and 19c Switch;
21 ... Main load;
23 ... Starter;
27 ... Vehicle control circuit;
31 ... Electric storage unit;
33 ... Electric charge circuit;
35, and 131 ... Switch;
41, 125, and 141 ... Voltage detector circuit;
43, 43A, 43B, 43C, 43D, and 43E ... Control circuit;
119, and 123 ... Connection point;
121, 219, 221, 225, and 227 ... Diode;
129 ... Fan;
195 Vehicle key switch;
203 ... Ignition switch; AND
223 ... Capacitor.

### BEST MODE FOR CARRYING OUT THE INVENTION

Preferred embodiments of the present invention will be described below with reference to the drawings. It is noted that like components are denoted by like reference numerals.

### FIRST PREFERRED EMBODIMENT

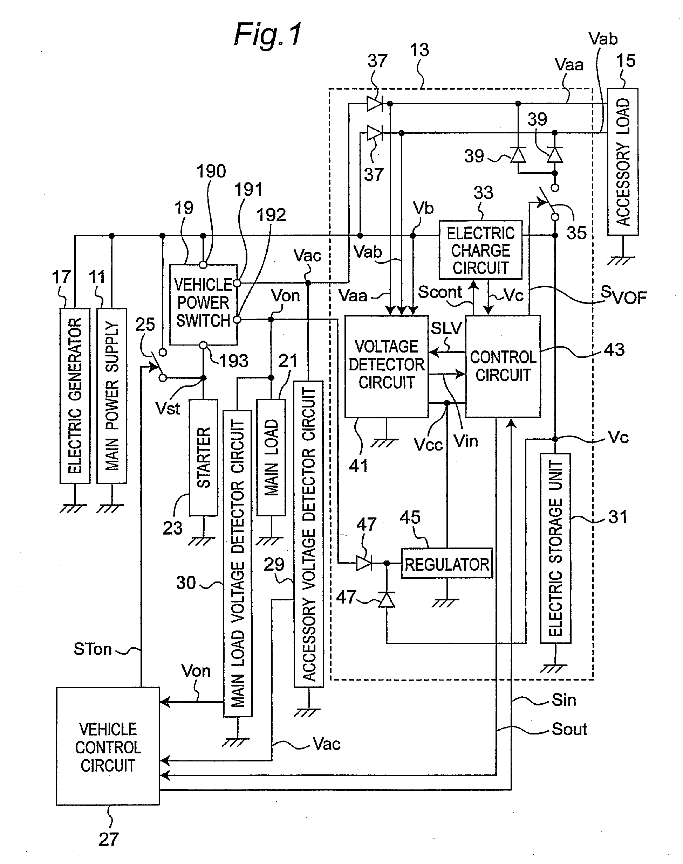

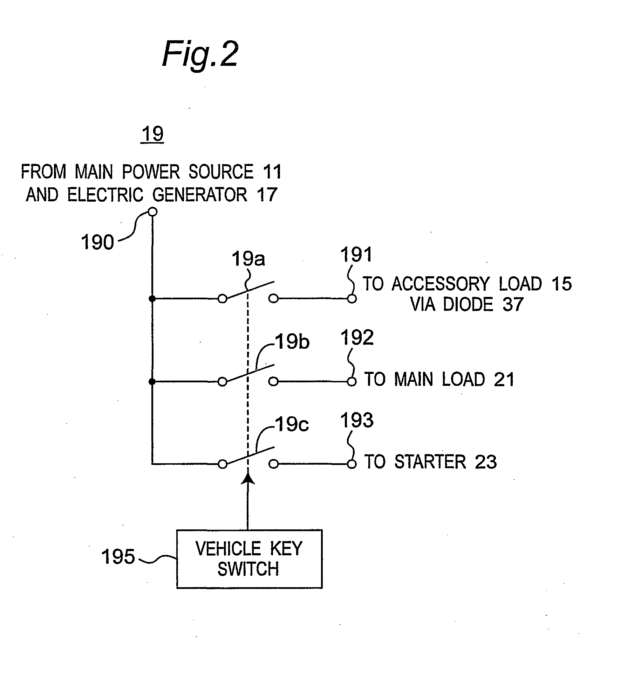

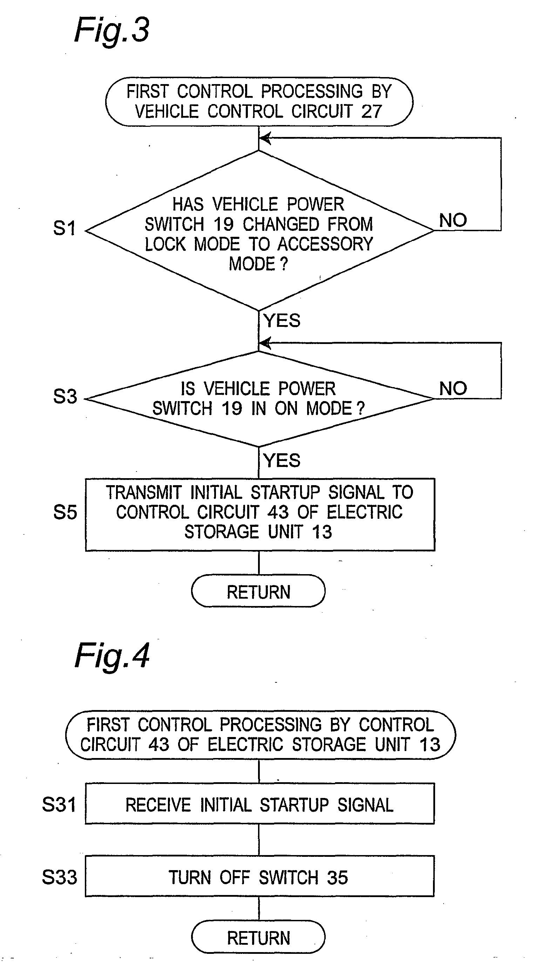

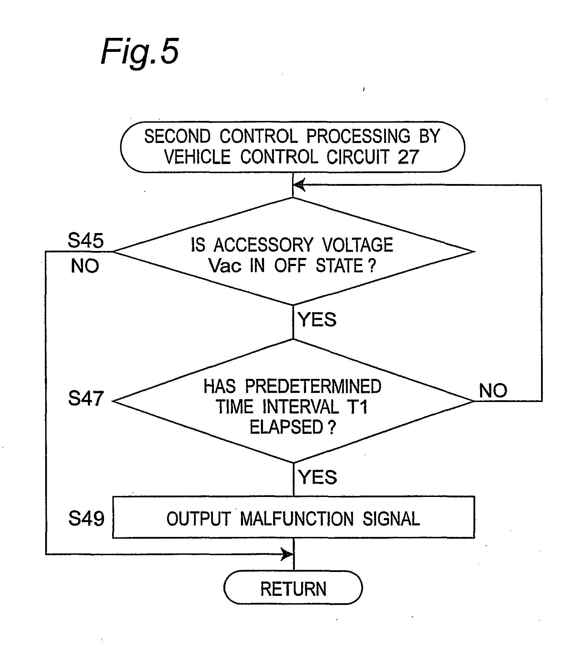

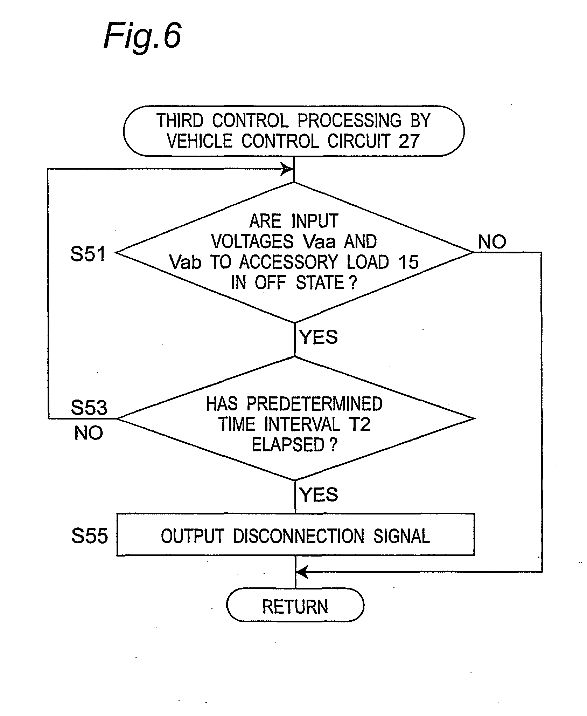

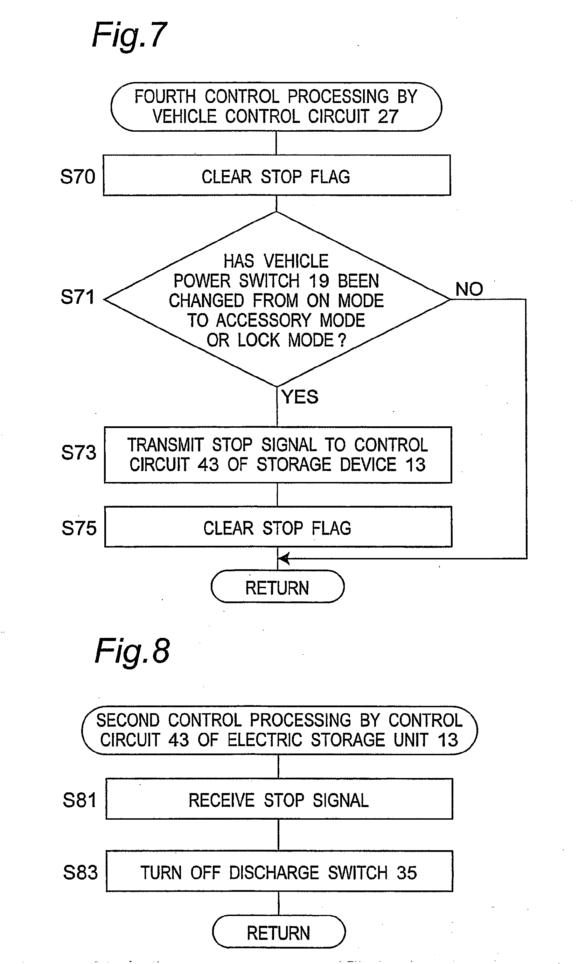

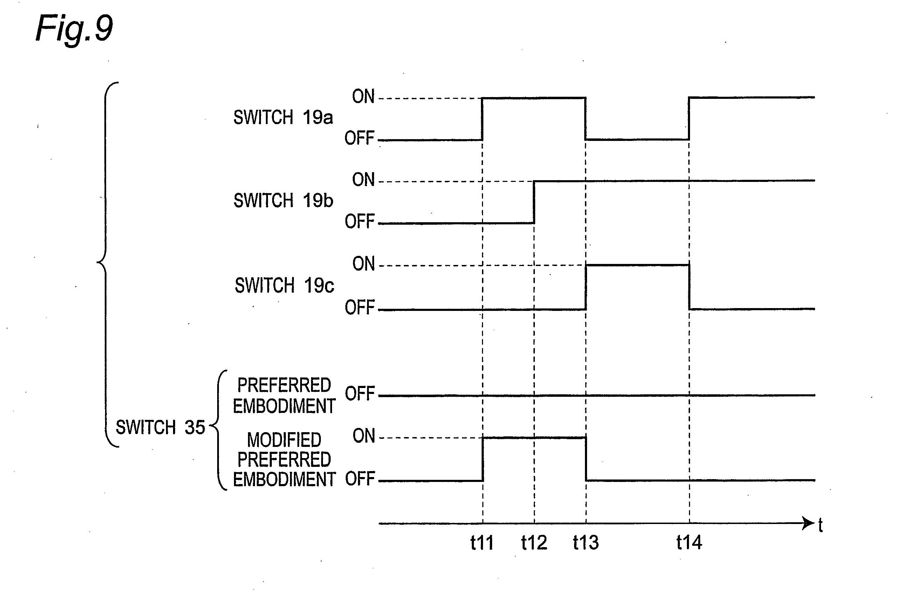

Fig. 1 is a block diagram showing a configuration of a vehicle power supply apparatus having an electric storage apparatus 13 according to the first preferred embodiment of the present invention. Fig. 2 is a circuit diagram showing a detailed configuration of the vehicle power switch 19 of Fig. 1. Fig. 3 is a flow chart showing the first control processing executed by the vehicle control circuit 27 of Fig. 1. Fig. 4 is a flow chart showing the first control processing executed by the control circuit 43 of the electric storage apparatus 13 of Fig. 1. Fig. 5 is a flow chart showing the second control processing executed by the vehicle control circuit 27 of Fig. 1. Fig. 6 is a flow chart showing the third control processing executed by the vehicle control circuit 27 of Fig. 1. Fig. 7 is a flow chart showing the fourth control processing executed by the vehicle control circuit 27 of Fig. 1. Further, Fig. 8 is a flow chart showing the second control processing executed by the control circuit 43 of the electric storage apparatus 13 of Fig. 1. Fig. 9 shows an operation of the vehicle power supply apparatus of Fig. 1 and a vehicle power supply apparatus according to its modified preferred embodiment, and a timing chart showing changes of switches 19a, 19b and 19c and a switch 35. In this case, Figs. 3 and 4 show the operation at the timing of the first vehicle startup from the vehicle nonuse state of the vehicle power supply apparatus. Fig. 5 shows the operation of the malfunction detection of the accessory power system of the vehicle power supply apparatus. Fig. 6 shows the operation of disconnection detection to the load of the vehicle power supply apparatus. Figs. 7 and 8 show the operation of the vehicle control circuit and the control circuit of the electric storage apparatus when the operation state of the vehicle supply apparatus changes from the vehicle use state to the vehicle nonuse state.

Referring to Fig. 1, the electric storage apparatus 13 that stores the electric power from the main power supply 11 is connected to the main power supply 11 including a battery, and a load (hereinafter referred to as an accessory load 15) including accessories such as audio, navigation and audio visual navigation systems are connected to the output of the electric storage apparatus 13. In this case, an electric generator 17 that generates power by being driven by the engine (not shown) is connected to the main power supply 11, and the main power supply 11 is charged by the generator.

Moreover, a vehicle power switch 19 to select the destination of power supply by key operation of the vehicle key switch 195 of Fig. 2 is connected to the main power supply 11. With this arrangement, the electric power from the main power supply 11 is supplied to the load in the vehicle. The vehicle power switch 19 has four operation modes of a lock mode, an accessory mode, an ON mode and a start mode in a manner similar to that of the prior art. Therefore, the vehicle power switch 19 selects any one or a plurality of an accessory output terminal 191, an ON-mode output terminal 192 and a start output terminal 193 in correspondence with these modes.

The vehicle power switch 19 of Fig. 2 has three switches 19a, 19b and 19c, which are turned on/off based on the key operation of the vehicle key switch 195. Referring to Fig. 2, an input terminal 190 connected to the main power supply 11 and the electric generator 17 is connected to an accessory load 15 via the switch 19a and the output terminal 191 and further via a diode 37. Moreover, the input terminal 190 is connected to the main load 21 via the switch 19b. Further, the input terminal 190 is connected to the starter 23 via the switch 19c. In this case, the vehicle power switch 19 of Fig. 2 has the following four operation modes.
(1) Lock mode: The lock mode is a mode in which the outputs of the vehicle power switch 19 are all turned off, and the three switches 19a, 19b and 19c are all turned off. As a result, supplying of the electric power to the electric storage apparatus 13 and all the loads is stopped.
(2) Accessory mode: The accessory mode is a mode in which the electric power is supplied only to the accessory output terminal 191 among the output terminals of the vehicle power switch 19, where only the switch 19a of the accessory mode is turned on. Therefore, the accessory load 15 is connected to the accessory output terminal 191 via the electric storage apparatus 13 as described above.
(3) ON mode: The ON mode is a mode in which the electric power is supplied to the accessory output terminal 191 and the ON-mode output terminal 192 among the output terminals of the vehicle power switch 19, where the switches 19a and 19b are turned on and the switch 19c is turned off. Therefore, by establishing the ON mode, the electric power is supplied to the accessory load 15, all the loads (hereinafter referred to as a main load 21) connected to the ON-mode output terminal 192 and the electric storage apparatus 13.
(4) Start mode: The start mode is a mode in which the electric power is supplied to the ON-mode output terminal 192 and the start output terminal 193 among the output terminals of the vehicle power switch 19, where the switches 19b and 19c are turned on and the switch 19a is turned off. Therefore, by establishing the start mode, the electric power is supplied to the main load 21, the electric storage apparatus 13 and the starter 23 for starting the engine. In this case, the switch 19a of the accessory output terminal 191 is turned off, and therefore, supplying of the electric power to the accessory load 15 is stopped.

Moreover, with a mode change from the lock mode to the accessory mode, the switch 19a of the accessory output terminal 191 is turned on. However, in the first vehicle startup state, i.e., when the driver makes the vehicle power switch 19 enter the start mode to drive the starter 23, the switch 19a of the accessory output terminal 191 is turned off to supply the electric power from the main power supply 11 preferentially to the starter 23 (See the timing t13 of Fig. 9).

Further, the starter 23 is configured so as to be driven also by a starter switch 25 besides the start mode of the vehicle power switch 19. The starter switch 25 is used when the idling stop state is finished and the engine is restarted, and the on/off control thereof is performed by the vehicle control circuit 27.

The vehicle control circuit 27 is configured of a microcomputer and carries out various kinds of vehicle control. In this case, the functions necessary for the present preferred embodiment are limitedly described here. That is, an accessory voltage detector circuit 29 for detecting the voltage (hereinafter referred to as an accessory voltage Vac) of the accessory power system outputted from the accessory output terminal 191 is connected besides that a starter signal STon representing the on/off of the starter switch 25 described above is outputted. With this arrangement, the vehicle control circuit 27 takes in the accessory voltage Vac. Further, a main load voltage detector circuit 30 for detecting the voltage (hereinafter referred to as an ON-mode voltage Von) outputted from the ON-mode output terminal 192 is connected. With this arrangement, the vehicle control circuit 27 also takes in the ON-mode voltage Von. Moreover, the vehicle control circuit 27 performs input and output of various kinds of data with the electric storage apparatus 13, using an input signal Sin and an output signal Sout.

Next, the detailed configuration of the electric storage apparatus 13 will be described below.

The electric storage unit 31 has a built-in electric storage unit 31 for storing the electric power to be supplied to the accessory load 15 after the idling stop. In this case, an electric double layer capacitor capable of performing rapid electric charge and discharge was employed for the electric storage unit 31. The electric storage unit 31 is charged with the electric power from the main power supply 11, and an electric charge circuit 33 is connected between the main power supply 11 and the electric storage unit 31 for the purpose. On the other hand, the electric power from the electric storage unit 31 is discharged to the accessory load 15 by the discharge switch 35.

In the accessory load 15, two systems of a voltage Vab supplied directly from the main power supply 11 and a voltage Vaa supplied from the accessory power system are connected respectively via diodes 37 and 37 for the prevention of a reverse flow of the current. Therefore, the output of the discharge switch 35 is branched into two systems and connected to the accessory load 15 respectively via diodes 39 and 39 for the prevention of a reverse flow of the current. Moreover, a voltage detector circuit 41 for detecting either one of the voltages Vaa and Vab and the voltage Vb of the main power supply 11 in a switchover manner is connected to the electric storage apparatus 13. Upon receiving a voltage selection signal SLV for selecting the voltage to be detected from the control circuit 43, the voltage detector circuit 41 detects a voltage corresponding to it and transmits a voltage signal Vin to the control circuit 43.

The control circuit 43 includes a microcomputer, and carries out communications with the vehicle control circuit 27 and control of the electric charge circuit 33 and the discharge switch 35 in addition to communications with the voltage detector circuit 41. It is noted that the charge control of the electric charge circuit 33 and the on/off control of the discharge switch 35 are performed by using a control signal Scont and a discharge switch signal S_{VOF}, respectively. Moreover, the electric charge circuit 33 has a function of detecting the voltage Vc of the electric storage unit 31 and transmit the same to the control circuit 43.

The driving electric power for the voltage detector circuit 41 and the control circuit 43 is supplied from a regulator 45. The regulator 45 transforms the inputted voltage into a constant voltage (for example, 5 VDC) and outputs the same, and the electric power inputted to the regulator 45 is supplied from the main power supply 11 or the electric storage unit 31. That is, the electric power from the main power supply 11 is normally inputted from the ON-mode output terminal 192 of the vehicle power switch 19 to the regulator 45 via a diode 47 for the prevention of a reverse flow of the current. However, the electric power from the electric storage unit 31 is inputted to the regulator 45 via another diode 47 when the voltage of the main power supply 11 drops after the idling stop. With this arrangement, the voltage detector circuit 41 and the control circuit 43 can continuously operate even at the timing of driving the starter 23 after the idling stop.

Next, the operation of the vehicle power supply apparatus as described above will be described below.

First of all, the operation of the vehicle power supply apparatus when the starter 23 is driven after the idling stop is similar to that of the prior art. That is, the electric storage apparatus 13 continues to monitor the voltage Vb of the main power supply 11 by the voltage detector circuit 41, and upon detecting that the voltage Vb drops to or below a threshold value (for example, 10.5 V that is a predetermined lower limit voltage capable of driving the accessory load 15) due to the driving of the starter 23, the unit carries out the operation of permitting power supply from the electric storage unit 31 to the accessory load 15. In concrete, the control circuit 43 transmits the discharge switch signal S_{VOF} for turning on the discharge switch 35 to the discharge switch 35. By this operation, the discharge switch 35 is turned on, and the electric power is supplied from the electric storage unit 31 to the accessory load 15 via the discharge switch 35 and the diode 39. As a result, the accessory load 15 can continuously operate even if the starter 23 is being driven. At this time, the voltage Vb of the main power supply 11 drops to, for example, about 6 V, and therefore, the anode side voltage of the diode 37 also drops. Therefore, even if the discharge switch 35 is turned on to supply electric power from the electric storage unit 31, the diode 37 is turned off, as a consequence of which no reverse current flows from the electric storage unit 31 to the main power supply 11.

Next, the operation characteristic of the present preferred embodiment will be described below with reference to Figs. 3 to 8. It is noted that the processings of Figs. 3 to 8 are subroutine processings executed when in the cases described below.

In the first control processing of the vehicle control circuit 27 of Fig. 3, the operation when the operation state of the vehicle power supply apparatus first changes from the vehicle nonuse state to the vehicle startup state will be described below. The driver switches the vehicle power switch 19 from the lock mode to the accessory mode in order to use the vehicle. By this operation, the switch 19a of the accessory mode built in the vehicle power switch 19 is turned on, and the electric power from the accessory power system is supplied from the accessory output terminal 191 to the accessory load 15 via the diode 37 provided for the electric storage apparatus 13, as a consequence of which the accessory load 15 starts up. By this operation, the accessory voltage Vac is applied to the accessory voltage detector circuit 29, and therefore, the vehicle control circuit 27 judges whether or not the vehicle power switch 19 has switched over to the accessory mode by comparing whether or not the output of the accessory voltage detector circuit 29, i.e., the accessory voltage Vac has a predetermined value (set to 10.5 V equal to the above threshold value in the present preferred embodiment) or more (at step S1). If the switchover to the accessory mode is not effected (No at step S1), the program flow returns again to step S1 to continue the judgment of switchover to the accessory mode.

If it is judged that the switchover to the accessory mode is effected (Yes at step S1), the vehicle control circuit 27 detects that the operation state of the vehicle power supply apparatus first changes from the vehicle nonuse state to the vehicle startup state (or initial startup state). Subsequently, it is judged whether or not the driver has turned on the vehicle power switch 19 (at step S3). This is to judge whether or not the vehicle power switch 19 has been switched over to the ON mode by comparing whether or not the output of the main load voltage detector circuit 30, i.e., the ON-mode voltage Von is equal to the predetermined value (it is set to 10.5 V in a manner similar to that of the above case) (at step S3). If the vehicle power switch 19 is not in the ON mode (No at step S3), the processing of step S3 is continued until the ON mode is established. When the vehicle power switch 19 enters the ON mode (Yes at step S3), the switch 18b is turned on to supply the electric power from the ON-mode output terminal 192, and therefore, the regulator 45 outputs a voltage Vcc via the diode 47. By this operation, the electric power is supplied to the voltage detector circuit 41 and the control circuit 43, and therefore, the electric storage apparatus 13 starts up. As a result, the control circuit 43 starts operating, and its details will be described later. By the vehicle power switch 19 that has entered the ON mode, the vehicle control circuit 27 transmits a signal that represents the initial startup state as one signal of the output signal Sout to the control circuit 43 of the electric storage apparatus 13 (at step S5).

Through the above operation, the initial startup operation of the vehicle control circuit 27 relevant to the electric storage apparatus 13 ends. Interlinked with the operation, the control circuit 43 of the electric storage apparatus 13 carries out the initial startup operation as follows.

In the first control processing of the control circuit 43 of the electric storage apparatus 13 of Fig. 4, when the vehicle power switch 19 first enters the ON mode by Yes at step S3 of Fig. 2, the electric storage apparatus 13 starts up as described above, and the operation of the control circuit 43 starts. Subsequently, an initial startup signal is transmitted from the vehicle control circuit 27 at step S5, and therefore, the signal is received as one signal of the input signal Sin of the control circuit 43 (at step S31). By this operation, the control circuit 43 can recognize that the operation state of the vehicle power supply apparatus first changes from the vehicle nonuse state to the vehicle startup state, and therefore, the discharge switch 35 is turned off so that supplying of the electric power from the electric storage apparatus 13 to the accessory load 15 is inhibited (at step S33). Thus the control circuit 43 ends the initial startup operation.

Subsequently, when the driver makes the vehicle power switch 19 enter the start mode to drive the starter 23 and start the engine, the switch 19a of the accessory mode is turned off to give priority to supplying of the electric power to the starter 23. By this operation, the engine startup is completed when the engine rotating speed exceeds a threshold value, and the switch 19a of the accessory mode returns to the ON mode (from the timing t13 to the timing t14 of Fig. 9).

By the above operation of the electric storage apparatus 13, supplying of the electric power from the electric storage unit 31 to the accessory load 15 is inhibited when the operation state of the vehicle power supply apparatus first changes from the vehicle nonuse state to the vehicle startup state. Therefore, if the vehicle power switch 19 is made to enter the start mode, supplying of the electric power to the accessory load 15 is stopped. This consequently eliminates the possibility that the accessory load 15 occasionally becomes operative or nonoperative depending on the amount of charge of the electric storage unit 31 at the initial startup timing. Therefore, the possibility of the driver's misconception of the failures of the electric power system and accessory load 15 can be reduced, and a highly reliable vehicle power supply apparatus can be obtained.

It is noted that the accessory voltage detector circuit 29 may be provided in the electric storage apparatus 13. In this case, the electric power is supplied to the electric storage apparatus 13 by the switchover of the vehicle power switch 19 to the ON mode. Therefore, the control circuit 43 takes in the output signal of the accessory voltage detector circuit 29 at the time, and it is judged that the operation state of the vehicle power supply apparatus first changes from the vehicle nonuse state to the vehicle startup state has occurred if the accessory voltage Vac is equal to or larger than the predetermined value (for example, 10.5 V). The discharge switch 35 is controlled by this. With this arrangement, the function of the accessory voltage detector circuit 29 can be built in the voltage detector circuit 41, and therefore, a simpler configuration can be achieved.

Next, the malfunction detection processing of the accessory power system when the vehicle is in use will be described below with reference to Fig. 5. It is noted that the processing may be executed arbitrarily when the vehicle is in use or executed at the turning point that the electric power supply source to the accessory load 15 is switched over when, for example, the idling stop is finished. In order to provide compatibility with either case, the processing of Fig. 5 will be described on the assumption that it is subroutine processing.

In the second control processing of the vehicle control circuit 27 of Fig. 5, when the vehicle control circuit 27 starts the malfunction detection processing, the accessory voltage Vac is detected by the accessory voltage detector circuit 29, and it is judged whether or not the current state is the OFF state (at step S45). In this case, the fact that the voltage is in the OFF state means that there is substantially no voltage, and the judgment of the OFF state is made depending on whether or not the accessory voltage Vac has become equal to or smaller than a predetermined threshold value (voltage slightly larger than 0 V). The predetermined value is set to the lower limit voltage (for example, 10.5 V) capable of driving the accessory load 15 in a manner similar to that of the case of the threshold value described above. If the accessory voltage Vac is still in the OFF state (Yes at step S45), it is judged whether or not a predetermined time interval has elapsed (at step S47). In this case, the predetermined time interval T1 is set to, for example, about one second. If the predetermined time interval T1 has not elapsed (No at step S47), the program flow returns again to step S45. When the predetermined time interval T1 has elapsed (Yes at step S47), and this means that the accessory voltage Vac is in the OFF state for a predetermined time interval T1 or a longer time interval, the malfunction of the accessory power system of the vehicle power switch 19 or the peripheral wiring is supposed. Therefore, a malfunction signal (this means a warning signal of alarm etc.) is outputted to warn the driver of the malfunction of the accessory power system and to urge the driver to repair it (at step S49). This operation accurately warns the malfunction of the vehicle power supply apparatus, and therefore, high reliability is obtained. If the accessory voltage Vac is not in the OFF state within the predetermined time interval T1 (No at step S45), and this means that the accessory power system in the normal state, the subroutine processing is finished.

Next, detection processing of disconnection to the load when the vehicle is in use will be described below with reference to Fig. 6. It is noted that the operation may be executed arbitrarily when the vehicle is in use or executed at the turning point that the electric power supply source to the accessory load 15 is switched over when, for example, the idling stop is finished. In order to provide compatibility with either case, the processing of Fig. 6 will be described on the assumption that it is subroutine processing.

In the third control processing of the vehicle control circuit 27 of Fig. 6, when the control circuit 43 of the electric storage apparatus 13 starts the disconnection detection processing, the voltage detector circuit 41 is first controlled to detect the input voltages Vaa and Vab supplied to the accessory load 15. At this time, the electric power supply source to the accessory load 15 may be either the main power supply 11 or the electric storage unit 31. Next, it is judged whether or not each of the voltages Vaa and Vab is in the OFF state (at step S51). In this case, the judgment of the OFF state is made depending on whether or not each of the voltages Vaa and Vab is not larger than a predetermined value. The predetermined value is set to, for example, 9.8 V that is the lower limit voltage capable of operating the accessory load 15. The predetermined value in the processing of step S45 of Fig. 5 is set to 10.5 V, and this is the predetermined value for the accessory voltage Vac. Since the diode 37 was connected between the accessory voltage Vac and the input voltage Vab to the accessory load 15, the predetermined value at step S51 was set to 9.8 V by subtracting a voltage drop (0.7 V) ascribed to it. The predetermined value becomes 9.8 V in either the case of the input voltage Vaa to the accessory load 15 with respect to the main power voltage Vb or the case of the input voltages Vaa and Vab to the accessory load 15 with respect to the voltage Vc of the electric storage unit 31. Moreover, since the input voltages Vaa and Vab to the accessory load 15 are normal if neither of the input voltages Vaa and Vab to the accessory load 15 is in the OFF state at step S51 (No at step S51), the subroutine processing is immediately ended.

If the input voltages Vaa and Vab are in the OFF state (Yes at step S51), it is judged whether or not a predetermined time interval T2 has elapsed (at step S53). The predetermined time interval T2 was set to one second in a manner similar to that of the case of the predetermined time interval T1 at step S47 of Fig. 5. If the predetermined time interval T2 has not elapsed (No at step S53), the program flow returns again to step S51, and it is judged whether or not the input voltages Vaa and Vab to the accessory load 15 are in the OFF state until the predetermined time interval T2 elapses. When the predetermined time interval T2 has elapsed (Yes at step S53), and this means that the input voltages Vaa and Vab supplied to the accessory load 15 are in the OFF state for an interval of not less than the predetermined interval T2, it can be understood that disconnection occurs in the electric power system wiring to the accessory load 15 from the main power supply 11 and the electric storage unit 31. Therefore, the control circuit 43 outputs a disconnection signal to the vehicle control circuit 27 (at step S55) and ends the subroutine processing. In response to this, the vehicle control circuit 27 warns the driver of disconnection to urge the driver to repair it. By this operation, high reliability is obtained as a vehicle power supply apparatus.

Next, processing when the use of the vehicle ends and the operation state of the vehicle power supply apparatus changes from the vehicle use state to the vehicle nonuse state occurs will be described with reference to Figs. 7 and 8. It is uncertain when the use of the vehicle ends, and therefore, the processing of Fig. 7 is executed periodically by, for example, interrupt processing or the like. Therefore, the processing of Figs. 7 and 8 will be described on the assumption that it is subroutine processing.

When the subroutine of the vehicle control circuit 27 shown in Fig. 7 is executed, a stop flag representing that the use of the vehicle has ended is first cleared (at step S70). Next, when ending the use of the vehicle, the driver switches the vehicle power switch 19 from the ON mode to the accessory mode or the lock mode. By this operation, the switch 19b of the ON-mode output terminal 192 of the vehicle power switch 19 is turned off. Therefore, the vehicle control circuit 27 judges whether or not the vehicle power switch 19 has been switched over from the ON mode to the accessory mode or the lock mode depending on whether or not the output signal Von from the main load voltage detector circuit 30 enters the OFF state (at step S71). If no switchover has occurred (No at step S71), and this means the vehicle use state, then the subroutine processing is immediately ended.

If the operation mode of the vehicle power switch 19 has been switched over from the ON mode to the accessory mode or the lock mode (Yes at step S71), the stop signal is transmitted to the control circuit 43 of the electric storage apparatus 13 (at step S73). Subsequently, the stop flag is turned on (at step S75), and the subroutine processing is ended. By this operation, the end of the use of the vehicle can be perceived by checking the stop flag by the main routine of the vehicle control circuit 27 although not shown in the flow chart.

By the above processing, end judgment processing of the use of the vehicle in the vehicle control circuit 27 relevant to the electric storage apparatus 13 is completed. Interlinked with the processing, the control circuit 43 of the electric storage apparatus 13 operates as follows.

Referring to Fig. 7, when the vehicle power switch 19 enters the accessory mode or the lock mode by Yes at step S71, the switch 19b of the ON-mode output terminal 192 is turned off, and therefore, the electric power from the electric storage unit 31 is supplied to the regulator 45. Therefore, the electric storage apparatus 13 can continuously operate. In this state, a stop signal is transmitted from the vehicle control circuit 27 at step S73, and therefore, this is received as one signal of the input signal Sin of the control circuit 43 (at step S81 of Fig. 8). By this operation, the control circuit 43, which can recognize that the operation state of the vehicle power supply apparatus changes from the vehicle use state to the vehicle nonuse state, ends the subroutine processing by turning off the discharge switch 35 so that the electric storage apparatus 13 inhibits supplying of the electric power from the electric storage unit 31 to the accessory load 15 (at step S83).

By the above operation, any electric power is not supplied from the electric storage unit 31 to the accessory load 15 even in the vehicle nonuse state in which the vehicle power switch 19 is made to enter the accessory mode or the lock mode. That is, the switch 35 keeps the OFF state (See Fig. 9). This therefore eliminates the possible continuous operation of the accessory load 15 despite that the vehicle power switch 19 is in the lock mode, and the possibility of the driver's misconception of the failures of the electric power system, the accessory load 15 and so on can be reduced.

With the above configuration and operation, supplying of the electric power from the electric storage apparatus 13 to the accessory load 15 is inhibited by recognizing the initial startup of the vehicle and the vehicle nonuse state, and therefore, a highly reliable vehicle power supply apparatus that reduces the possibility of the driver's misconception of the failures can be provided.

Although the electric storage unit employed in the electric storage unit 31 includes the electric double layer capacitor in the above preferred embodiment, the present invention is not limited to this but allowed to constitute the electric storage unit of another electric storage unit of an electrochemical capacitor or the like.

In the above preferred embodiment, supplying of the electric power from the electric storage apparatus 13 to the accessory load 15 is inhibited by recognizing the initial startup of the vehicle and the vehicle nonuse state, and the switch 35 is kept off. That is, as apparent from the switch 35 of the present preferred embodiment of Fig. 9, the control circuit 43 carries out control so as to inhibit supplying of the electric power from the electric storage unit 31 to the accessory load 15 (a) when the vehicle is in the nonuse state and (b) when the electric power is supplied from the main power supply 11 to the starter 23 to start the engine of the vehicle, and any electric power is not supplied from the main power supply 11 to the accessory load 15. The present invention is not limited to this but allowed to turn on the switch 35 in synchronization with the ON period of the switch 19a in a period from time t11 to time t13. In this case, the control circuit 43 controls the electric storage unit 31 to inhibit supplying of the electric power from the electric storage unit 31 to the load 15 (a) when the vehicle is in the nonuse state and (b) when the electric power is supplied from the main power supply 11 to the starter 23 to start the engine of the vehicle, and any electric power is not supplied from the main power supply 11 to the accessory load 15. Even with the above configuration, an operational effect similar to the one described above can be obtained.

### SECOND PREFERRED EMBODIMENT

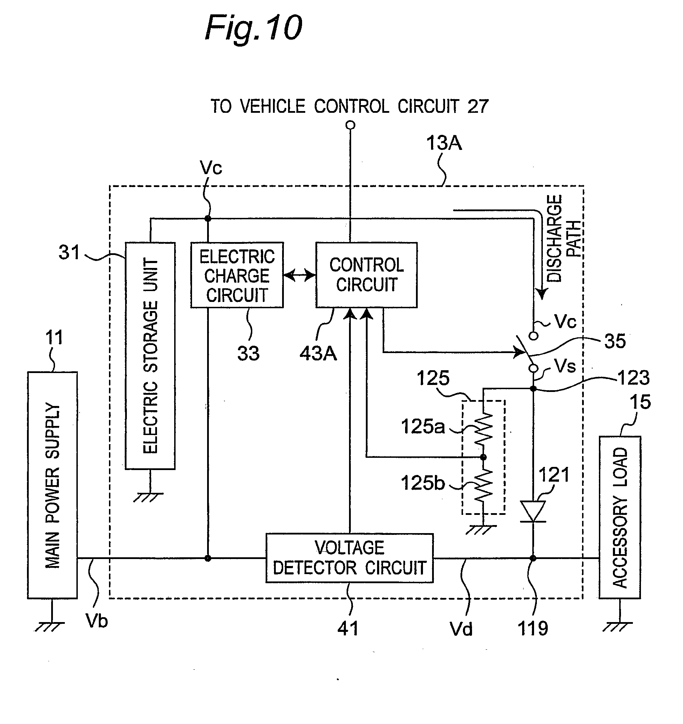

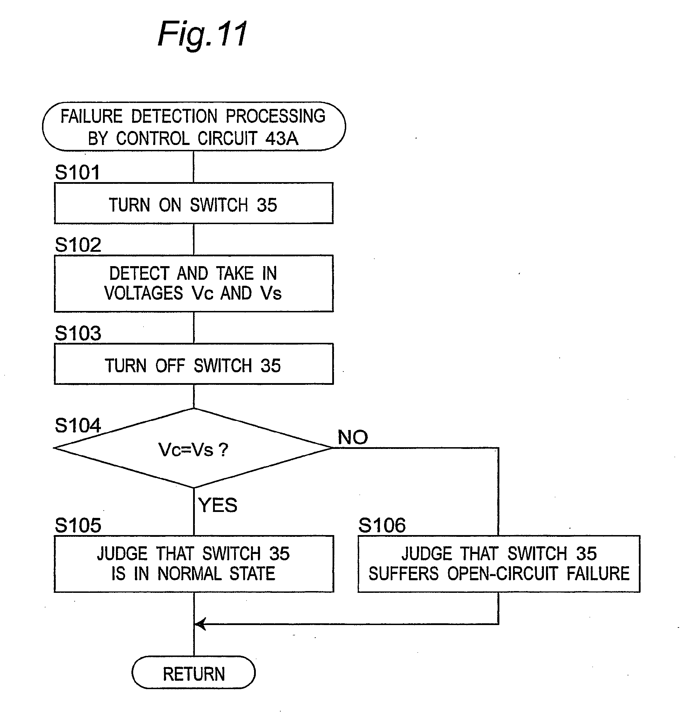

Fig. 10 is a block diagram showing a configuration of a vehicle power supply apparatus having an electric storage apparatus 13A according to the second preferred embodiment of the present invention, and Fig. 11 is a flow chart showing a failure detection processing executed by the control circuit 43A of Fig. 10. In the second to fourth preferred embodiments, a case where an electric storage apparatus is applied to an idling stop car will be described.

Referring to Fig. 10, an electric storage apparatus 13A is connected between the main power supply 11 and the accessory load 15. The reference numeral 11 denotes a battery, and a starter that intermittently consumes a large current is also connected to the main power supply 11 although not shown in the figure. Moreover, the accessory load 15 denotes accessory devices of an audio, navigation and audiovisual navigation systems and the like.

The electric storage apparatus 13A has the following configuration. First of all, an electric charge circuit 33 and a voltage detector circuit 41 to detect the voltage Vb of the main power supply 11 is connected to the output terminal of the main power supply 11. An electric storage unit 31 is connected to the electric charge circuit 33. Therefore, the electric charge circuit 33 carries out charge control of the electric storage unit 31 while detecting the detection voltage Vc of the electric storage unit 31. It is noted that the electric storage unit 31 employs an electric double layer capacitor as an electric storage unit to store power, and a plurality of the capacitors are connected in series to produce the necessary power. Moreover, a switch 35 for outputting the electric power from the electric storage unit 31 to the accessory load 15 is connected as shown in Fig. 10. A diode 121 is connected between a connection point 119 located between the voltage detector circuit 41 and the accessory load 15 and one terminal of the switch 35. The diode 121 has its anode connected to the switch 35 side and its cathode connected to the connection point 119 side. Although it is not shown in the figures, a built-in reverse current flow preventing diode of which the cathode is located on the accessory load 15 side is provided on the output side of the electric power system wiring of the voltage detector circuit 41.

A voltage detector circuit 125 to detect a voltage Vs at a connection point 123 is connected to the connection point 123 located between one terminal of the switch 35 and the diode 121. The voltage detector circuit 125 has a configuration to output a midpoint voltage when a resistance division is effected between the connection point 123 and the ground by, for example, two resistors 125a and 125b each having an identical resistance. The electric charge circuit 33, the voltage detector circuit 41, the switch 35 and the voltage detector circuit 125 are connected also to the control circuit 43A including a microcomputer. With this arrangement, the control circuit 43A carries out control of the electric charge circuit 33 and the switch 35 simultaneously with taking in the output signal or the output voltage of the voltage detector circuit 41 and the voltage detector circuit 125. Moreover, the control circuit 43A has a function of transmission and reception of signals with a vehicle control circuit (not shown).

Next, operation of the electric storage apparatus 13A will be described below. First of all, when an ignition switch (not shown) is turned on to start up the vehicle, the control circuit 43A instructs the electric charge circuit 33 to charge the electric storage unit 31 simultaneously with driving the engine. By this operation, the electric storage unit 31 is charged with the electric power from the main power supply 11. The electric charge circuit 33 is charged up to full electric charge while detecting the voltage Vc of the electric storage unit 31 by a built-in voltage detector circuit. At this time, the control circuit 43A keeps the switch 35 off so that the charge current to the electric storage unit 31 does not flow to the accessory load 15 side. Moreover, there is a possibility that the electric power cannot sufficiently be supplied from the electric storage unit 31 to the accessory load 15 during electric charge, the control circuit 43A transmits an electric discharge inhibiting signal to the vehicle control circuit. By this operation, the vehicle control circuit carries out control so as not to effect the idling stop operation.

If the electric storage unit 31 reaches the full electric charge, the electric charge is completed, and the electric charge circuit 33 carries out constant voltage control to maintain the full electric charge voltage. When the control circuit 43A detects the completion of the charge operation, the control circuit 43A transmits an electric discharge permission signal from the electric storage unit 31 to the vehicle control circuit. By this operation, the vehicle control circuit permits the idling stop operation. Subsequently, the control circuit 43A monitors the voltage Vb of the main power supply 11 by taking in the output of the voltage detector circuit 41.

In this state, it is assumed that the idling stop is effected and the engine is subsequently restarted. By this operation, the voltage Vb of the main power supply 11 rapidly drops due to a large current flowing to the starter (not shown). The change in the voltage Vb is detected by the voltage detector circuit 41 and transmitted to the control circuit 43A. The control circuit 43A turns on the switch 35 to supply a stable voltage to the accessory load 15. As a result, the electric power is supplied from the electric storage unit 31 to the accessory load 15 in the direction of arrow indicated as a discharge path of Fig. 10. At this time, the voltage Vb of the main power supply 11 has dropped due to the driving of the starter, and therefore, the voltage at the connection point 119 becomes smaller than the voltage of the electric storage unit 31. Therefore, the diode 121 is turned on, and the electric power from the electric storage unit 31 is preferentially supplied to the accessory load 15. At this time, the electric power from the electric storage unit 31 is not supplied to the main power supply 11 due to the built-in reverse current flow preventing diode of the voltage detector circuit 41.

Next, the current consumed by the starter reduces when the engine restart approaches completion, and therefore, the voltage Vb of the main power supply 11 rises. The change is detected by the voltage detector circuit 41, and when the change becomes equal to or larger than a predetermined value (set to 10.5 V that is the lower limit voltage capable of driving the accessory load 15 in the present first preferred embodiment), the control circuit 43A turns off the switch 35. By this operation, the electric power from the main power supply 11 is subsequently supplied to the accessory load 15, and the electric discharge from the electric storage unit 31 stops. Moreover, the control circuit 43A instructs the electric charge circuit 33 to recharge the electric power supplied from the electric storage unit 31 to the accessory load 15. It is noted that the control circuit 43A transmits the electric discharge inhibiting signal to the vehicle control circuit during the electric recharge as described above, and the electric discharge permission signal is transmitted when the electric charge is completed.

By repeating the above operation, the electric power from the electric storage unit 31 can compensate for the voltage fluctuation at the time of driving the starter even if the idling stop operation is performed many times during the use of the vehicle, and therefore, the accessory load 15 can continuously operate consistently stably.

In the electric storage apparatus 13A as described above, reliable operation of the switch 35 that controls the electric discharge from the electric storage unit 31 is important. Accordingly, in the electric storage apparatus 13A of the present preferred embodiment, failure detection of the switch 35 is performed only once until the electric storage unit 31 is fully charged with electric charge when a predetermined condition holds, i.e., when "the electric storage apparatus 13A first enter the use state from the nonuse state and the electric storage unit 31 is charged" (at the initial startup timing of the vehicle in the present preferred embodiment). In concrete, when the predetermined condition holds, the control circuit 43A first takes in both the terminal voltages Vc and Vs of the switch 35 in a state in which the switch 35 is in the OFF state. It is noted that the voltage Vc is detected by the electric charge circuit 33, and the voltage Vs is detected by the voltage detector circuit 125. In this case, the connection point 123 is connected to the ground via the voltage detector circuit 125 if the switch 35 is normally in the OFF state, and therefore, the voltage Vs becomes 0 V. On the other hand, the voltage Vc becomes the charge voltage (voltage value that is larger than 0 V and up to the full electric charge voltage) of the electric storage unit 31. Therefore, by judging whether or not both the voltages Vc and Vs have the above value, the "short-circuit failure" (failure of consistent short circuit without any chance of being turned off) of the switch 35 can be detected. That is, it can be understood that the switch 35 is normally in the OFF state if the voltage Vs is 0 V and the voltage Vc is the full electric charge voltage. On the other hand, since Vs = Vc if the "short-circuit failure" occurs, the "short-circuit failure" can be judged by detecting the voltages Vs and Vc.

Next, failure detection processing of the control circuit 43A will be described below with reference to Fig. 11. The control circuit 43A temporarily turns on the switch 35 (at step S101), takes in both terminal voltages Vc and Vs at the time (at step S102) and thereafter turns off the switch 35 (at step S103). A duration in which the ON state lasts is set to about one second within which both the terminal voltages Vc and Vs can be sufficiently taken in. Both the terminal voltages taken in are subjected to comparison (at step S104), and it is judged that the switch 35 is normally in the ON state (i.e., normal state) if both the terminal voltages satisfy the relationship of Vc = Vs (Yes at step S104) (at step S105). On the other hand, it is judged (at step S106) that the switch 35 is in the "open-circuit failure" (failure of consistent open circuit without the chance of being turned on) if both the terminal voltages do not satisfy the relationship of Vc = Vs (No at step S104).

The failure detection only of the switch 35 is performed once for a time interval to the timing when the electric storage unit 31 becomes fully charged at the initial startup timing of the vehicle. This is because the frequency of failures is not so high if the FET switch is employed for the switch 35 and the failure detection only at the initial startup timing of the vehicle is sufficient. Therefore, when a switch such as a relay or a reed switch having a contact point is employed for the switch 35, the failure detection frequency can be arbitrarily increased. Moreover, the failure detection of the switch 35 may be performed after the electric storage unit 31 is fully charged. In this case, the electric power at the full electric charge is disadvantageously consumed, and therefore, it is necessary to achieve the full electric charge again. In order to avoid such operation, the failure detection of the switch 35 is performed for a time interval to the timing of the full electric charge.

Moreover, since the idling stop operation is performed many times when the vehicle is used, the electric storage unit 31 is to repeat electric charge and discharge. By this operation, particularly the diode 121 gradually generates heat. This leads to the possibility of thermal runaway particularly when the diode 121 is of the Schottky type and to the possibility of a failure (for example, "short-circuit failure") as a consequence of reaching the operating limit of the diode 121 when this state is left intact.

Accordingly, the present preferred embodiment has such a configuration as detecting the abnormal heat generation state of the diode 121. In concrete, the control circuit 43A first takes in the voltage Vs at the connection point 123 when the switch 35 is turned off. It is judged that the diode 121 is in the abnormal heat generation state if the voltage Vs becomes equal to or larger than the operating limit value of the diode 121. Since there were correlations between the heat generation temperature and the voltage Vs as described later, the voltage Vs at which the diode 121 reached a critical temperature that exerts no serious influence on the diode 121 was preparatorily obtained, and it was set as the operating limit value.

The reason why the failure of the diode 121 can be thus judged is as follows. The output voltage (Vd in this case) of the electric power system wiring of the voltage detector circuit 41 is applied to the cathode of the diode 121. If the diode 121 generates heat in this state, a leakage current flows from the cathode to the anode. As apparent from Fig. 10, the voltage on the anode side of the diode 121 is the voltage Vs at the connection point 123, whereas the connection point 123 is connected to the ground via the voltage detector circuit 125. Therefore, no leakage current flows if the diode 121 is in the normal state, and therefore, the voltage Vs becomes 0 V when the switch 35 is turned off. However, when the leakage current flows due to heat generation, the voltage Vs becomes larger than 0 V. Therefore, the heat generation can be detected without adding any new circuit by detecting the voltage Vs when the switch 35 is turned off.

Upon detecting the abnormal heat generation of the diode 121, the control circuit 43A stops the electric charge and discharge of the electric storage unit 31 and transmits the electric discharge inhibiting signal to the vehicle control circuit. By this operation, the current from the electric storage unit 31 does not flow to the diode 121, and therefore, the temperature of the diode 121 drops. As a result, the voltage Vs attributed to the leakage current also drops. When the voltage Vs at the connection point 123 becomes equal to or smaller than the operable voltage of the diode 121 before long, control is performed to restart the electric charge and discharge of the electric storage unit 31, and the electric discharge permission signal is transmitted to the vehicle control circuit when the charge of the electric storage unit 31 is completed. With the control as described above, the abnormal heat generation of the diode 121 can be prevented, and the reliability of the electric storage apparatus 13A can be improved.

It is noted that the operable value of the diode 121 is set to a value smaller than the operating limit value. This is to avoid the disadvantage that the inhibit and permission of the electric charge and discharge of the electric storage unit 31 are repeated for a short time when the voltage Vs fluctuates due to noises or the like in the neighborhood of the operating limit value if both are equal to each other. Therefore, when the voltage Vs rises due to the abnormal heat generation of the diode 121 and reaches the operating limit value, inhibiting the electric charge and discharge of the electric storage unit 31, the electric charge and discharge of the electric storage unit 31 are not permitted until the voltage Vs drops to an operation permission value smaller than the operating limit value.

As described above, according to the present preferred embodiment, a highly reliable electric storage apparatus 13A can be provided by detecting the failure of the switch 35 when the predetermined condition holds and detecting the failure due to the abnormal heat generation of the diode 121. When the switch 35 or the diode 121 fails to operate properly, the control circuit 43A inhibits the electric charge and discharge of the electric storage unit 31, and transmits an event signal representing that the switch 35 fails to operate properly, to the vehicle control circuit. In response to this, the vehicle control circuit inhibits the idling stop operation and warns the driver of the failure of the electric storage apparatus 13A to urge the driver to repair it.

The failure of the switch 35 can be detected by the above configuration and operation, and the failure due to the abnormal heat generation of the diode 121 can be detected from the fluctuation in the voltage Vs at the connection point 123. Therefore, a highly reliable electric storage apparatus can be provided.

### THIRD PREFERRED EMBODIMENT

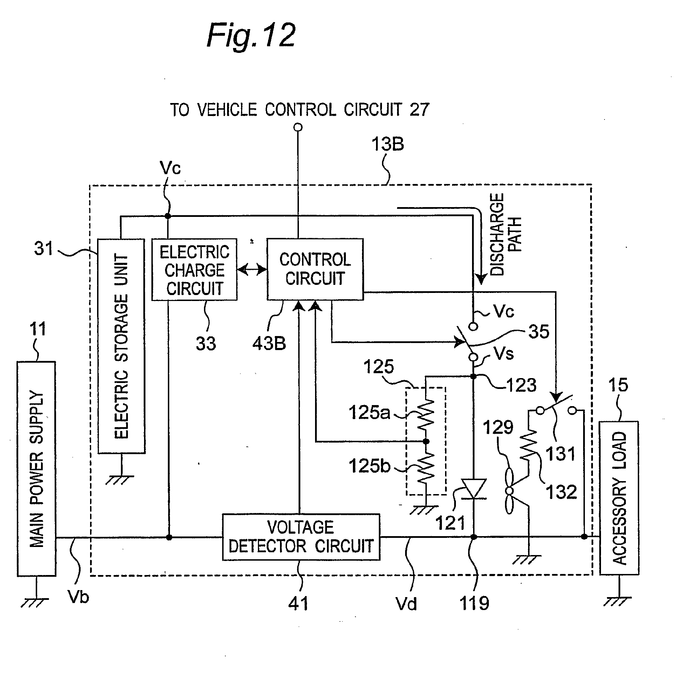

Fig. 12 is a block diagram showing a configuration of a vehicle power supply apparatus having an electric storage apparatus 13B according to the third preferred embodiment of the present invention. The electric storage apparatus 13B of the third preferred embodiment differs from the electric storage apparatus 13A of the second preferred embodiment of Fig. 10 in the following points.
(1) A control circuit 43B is provided in place of the control circuit 43A.
(2) A fan 129 is provided as cooling means so that the diode 121 is placed in a coolable region. The fan 129 is connected so that its driving electric power is obtained from a power output of the electric storage apparatus 13B.
(3) A fan switch 131 for turning on/off the fan 129 is connected in series with the fan 129.
(4) A signal line for turning on/off the fan switch 131 is connected to the control circuit 43B.

Next, the operation of the electric storage apparatus 13B of the third preferred embodiment will be described below with reference to Fig. 12. First of all, operations at the vehicle startup time and the idling stop time are the same as those of the second preferred embodiment, and therefore, no description is provided therefor. Moreover, the failure detection operation of the switch 35 which is performed when the predetermined condition holds, and the failure detection operation of the switch 35 and the diode 121 which is performed at the time of electric discharge of the electric storage unit 31 are also the same as those of the first preferred embodiment, and therefore, no description is provided therefor.

Next, the heat generation detection of the diode 121 characteristic of the operation of the third preferred embodiment will be described below. Abnormal heat generation of the diode 121 is detected by judging whether or not the voltage Vs has reached the operating limit value when the switch 35 is turned off in a manner similar to that of the second preferred embodiment. In this case, if the abnormal heat generation of the diode 121 is detected, natural radiation cooling control has been carried out so that no current flows to the diode 121 by inhibiting the electric charge and discharge of the electric storage unit 31 in the second preferred embodiment.

In contrast to this, when the abnormal heat generation of the diode 121 is detected in the present preferred embodiment, the control circuit 43B turns on the fan switch 131 to operate the fan 129. By this operation, the diode 121 placed in the coolable region of the fan 129 is forcedly cooled, and therefore, the voltage Vs drops to the operable value more rapidly then in the second preferred embodiment.

It is noted that the electric charge and discharge to the electric storage unit 31 are inhibited from when the voltage Vs reaches the operating limit value and until when it drops to the operable value in a manner similar to that of the second preferred embodiment. However, since the voltage Vs rapidly drops to the operable value, the time interval in the heat generation state is shortened, and the operating life of the diode 121 can be increased, and this leads to improvement in the reliability. Since the time interval when the electric charge and discharge are inhibited is also shortened, the idling stop operation can be performed more times by that much, and this contributes to a reduction in the fuel cost of the vehicle.

Moreover, the operable value of the diode 121 is made smaller than the operating limit value also in the third preferred embodiment in a manner similar to that of the second preferred embodiment. This avoids a trouble that the fan 129 repeats operation and stop in a short cycle due to the influence of noises and so on when the operable value is equal to the operating limit value.

Moreover, if the voltage Vs at the connection point 123 becomes equal to or smaller than the operable value of the diode 121, the control circuit 43B turns off the fan switch 131 to stop the fan 129. However, despite that the fan 129 is operating, upon detecting that the voltage Vs does not drop to the operable value and remains invariable for a predetermined time interval (the time interval is set to a predetermined value which is estimated by the thermal capacity and the maximum loss of the diode and its peripherals, the amount of wind of the fan and the maximum environmental temperature), the control circuit 43B judges that the switch 35 suffers the "short-circuit failure" because the diode 121 is cooled and not malfunctioning. By thus operating, it can be distinguished whether the switch 35 suffers the "short-circuit failure" or the diode 121 is generating heat in a case where the voltage Vs, which should originally be 0 V when the switch 35 is turned off, comes to have a certain voltage value, and an electric storage apparatus 13B of higher reliability can be obtained.

With the above configuration and operation, the failure detection of the switch 35 and the diode 121 becomes possible, and the abnormal heat generation of the diode 121 is detected from the variation in the voltage Vs at the connection point 123, allowing the cooling to be quickly performed. Therefore, a more reliable electric storage apparatus 13B can be provided.

Although the fan 129 is employed as the cooling means in the above preferred embodiment, the present invention is not limited to this but allowed to employ another means of a Peltier device or the like as the cooling means. However, a simpler structure can be provided, and not only the diode 121 but also the inside of the electric storage apparatus 13B can be wholly cooled by employing the fan 129. Therefore, the other heat generating components of the electric storage unit 31, the electric charge circuit 33 and so on can be simultaneously cooled, and the reliability of the entire electric storage apparatus 13B can be improved.

### FOURTH PREFERRED EMBODIMENT

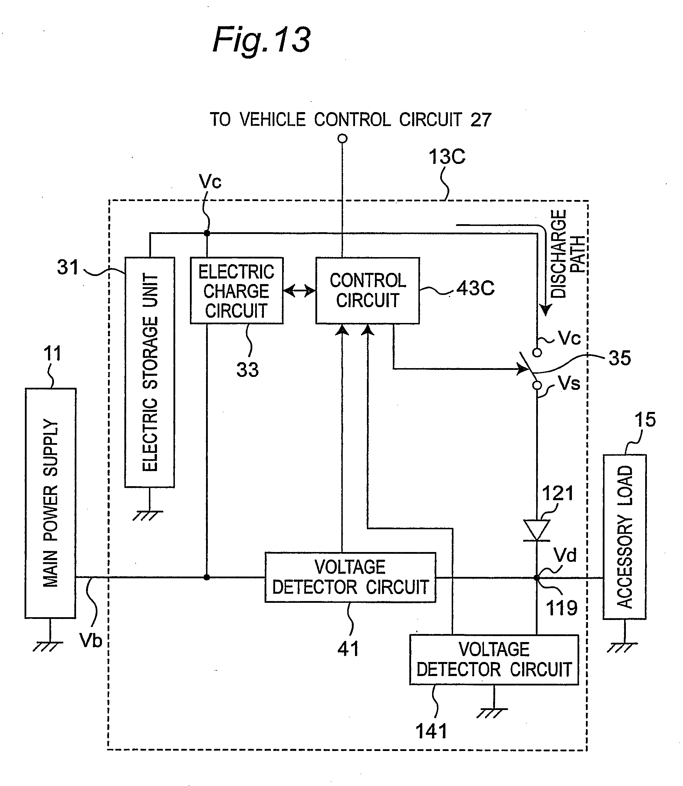

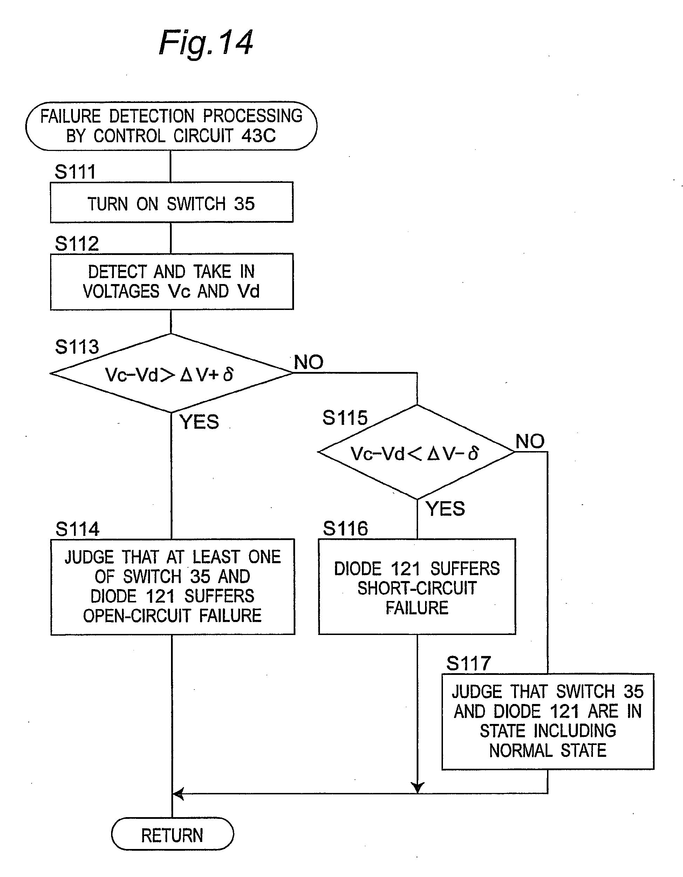

Fig. 13 is a block diagram showing a configuration of a vehicle power supply apparatus having an electric storage apparatus 13C according to the fourth preferred embodiment of the present invention, and Fig. 14 is a flow chart showing a failure detection processing executed by the control circuit 43C of Fig. 13. The electric storage apparatus 13C of the fourth preferred embodiment differs from the electric storage apparatus 13A of the second preferred embodiment of Fig. 10 in the following points.
(1) The control circuit 43C is provided in place of the control circuit 43A.
(2) The voltage detector circuit 125 is removed.
(3) A voltage detector circuit 141 to detect a voltage Vd at a connection point 119 is further provided. It is noted that the configuration of the voltage detector circuit 141 is similar to that of the voltage detector circuit 125, and the output voltage is inputted to the control circuit 43C.

Next, the operation of the electric storage apparatus 13C of the fourth preferred embodiment will be described below. First of all, operations at the vehicle startup timing and the idling stop time are the same as those of the second preferred embodiment, and therefore, no description is provided therefor. The failure detection of the switch 35 and the diode 121 characteristic of the present preferred embodiment will be described below. In order to obtain high reliability of the electric storage apparatus 13C, failure warning must be issued if at least one of the switch 35 and the diode 121 fails. Accordingly, if it is not particularly necessary to distinguish which has failed, the failure detection is performed as follows.

First of all, while the electric storage unit 31 is being discharged, the control circuit 43C takes in the voltage Vc of the electric storage unit 31 and the voltage Vd at the connection point 119 from the electric charge circuit 33 and the voltage detector circuit 141, respectively. In this case, the diode 121 has a characteristic that the cathode voltage (Vd in this case) becomes smaller than the anode voltage (Vs in this case). The voltage drop ΔV is generally about 0.6 to 0.7 V, which changes depending on the ambient temperature, deterioration with aging and so on. In this case, assuming that a permissible change for the electric storage apparatus 13C is ±δ, then the permissible range of the voltage drop is within a range of ΔV - δ to ΔV + δ.

Since the electric storage unit 31 is now being discharged, the switch 35 and the diode 121 are in the ON state. Therefore, a voltage difference Vc - Vd must be within the range of ΔV - δ to ΔV + δ in consideration of the permissible range including the voltage drop of the diode 121. Based on this requirement, the control circuit 43C judges the relations between the voltages Vc and Vd and the predetermined range of ΔV - δ to ΔV + δ.

In the failure detection processing of the control circuit 43C of Fig. 14, the switch 35 is turned on (at step S111) to take in the voltages Vc and Vd at this time. It is judged whether Vc - Vd > ΔV + δ (at step S113), and it is judged whether Vc - Vd < ΔV + δ (at step S115). If ΔV - δ ≤ Vc - Vd ≤ ΔV + δ holds (No at step S113 and No at step S115), the switch 35 and the diode 121 can be judged to be in a "state including the normal state". If Vc - Vd > ΔV + δ (Yes at step S113), and this means that the difference between the voltage Vc and the voltage Vd is larger than the permissible range, either one or neither of the switch 35 and the diode 121 is in the ON state. That is, it can be judged that at least one of the switch 35 and the diode 121 suffers the "open-circuit failure". If Vc - Vd < ΔV - δ (Yes at step S115), and this means that the voltage Vc and the voltage Vd are close to each other, it can be judged that the diode 121 suffers the "short-circuit failure".

As described above, according to the present preferred embodiment, if the failure detection is performed by the above method, the detection of the "open-circuit failure" of at least one of the switch 35 and the diode 121 and the detection of the "short-circuit failure" of the diode 121 can be achieved. Therefore, a highly reliable electric storage apparatus 13C can be provided. When the switch 35 and/or the diode 121 suffers a failure, the control circuit 43C inhibits the electric charge and discharge of the electric storage unit 31 and transmits an event signal presenting that the switch 35 suffers a failure to the vehicle control circuit. In response to this, the vehicle control circuit inhibits the idling stop operation and warns the driver of the failure of the electric storage apparatus 13C to urge the driver to repair the same apparatus.

### FIFTH PREFERRED EMBODIMENT

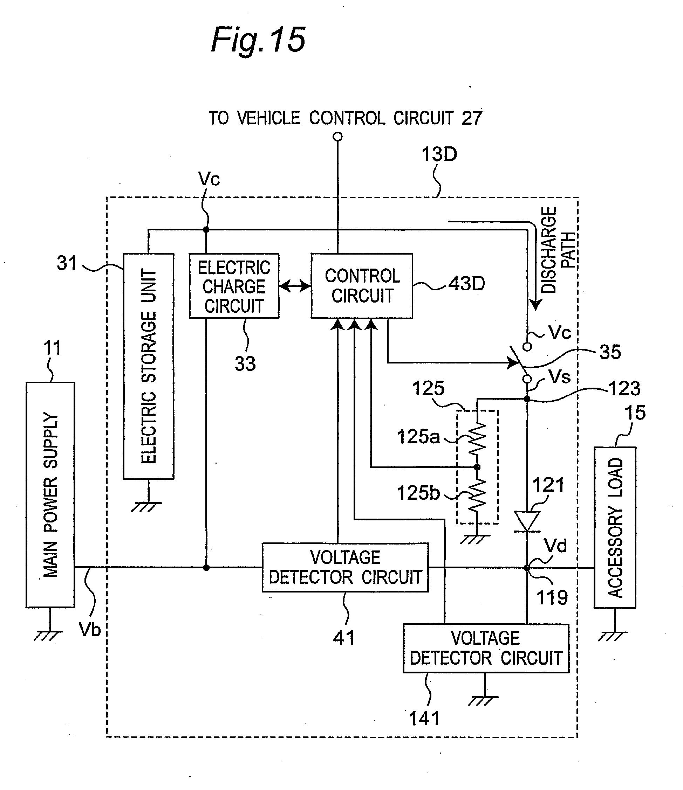

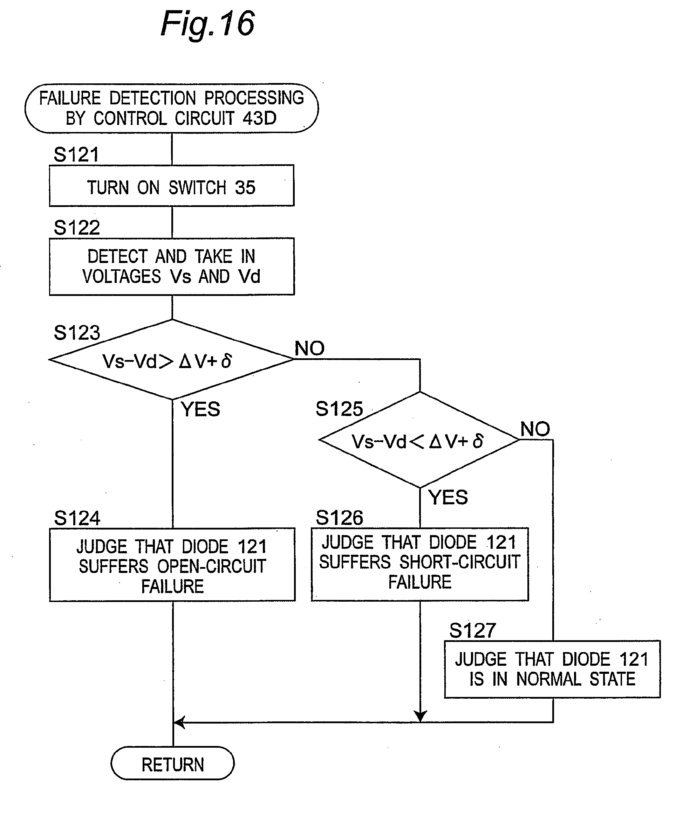

Fig. 15 is a block diagram showing a configuration of a vehicle power supply apparatus having an electric storage apparatus 13D according to the fifth preferred embodiment of the present invention, and Fig. 16 is a flow chart showing a failure detection processing executed by the control circuit 43D of Fig. 15. The electric storage apparatus 13D of the fifth preferred embodiment differs from the electric storage apparatus 13A of Fig. 10 in the following points.
(1) The control circuit 43D is provided in place of the control circuit 43A.
(2) A voltage detector circuit 141 to detect the voltage Vd at the connection point 119 and to output the result to the control circuit 43D is provided.

Referring to Fig. 15, the voltage Vd at the connection point 119 and the voltage Vs at the connection point 123 can be detected, and therefore, the failure of the switch 35 and the diode 121 can each be detected. The detail of the operation will be described below.

The control circuit 43D performs failure detection of the switch 35 and the diode 121 while the switch 35 is turned on to discharge power from the electric storage unit 31 to the accessory load 15. First of all, with regard to the failure detection of the switch 35, the voltage Vc of the electric storage unit 31 and the voltage Vs at the connection point 123 are taken in from the electric charge circuit 33 and the voltage detector circuit 125, respectively as described in the second preferred embodiment. By this operation, both terminal voltages of the switch 35 can be taken in. Since the electric storage unit 31 is now being discharged, the switch 35 is in the ON state. Therefore, if the switch 35 is in the normal state, a voltage relationship of Vc = Vs holds. If the voltage relationship of Vc = Vs does not hold, the switch 35 suffers the "open-circuit failure". By thus independently detecting the "open-circuit failure" of the switch 35, a more highly reliable electric storage apparatus 13D can be provided.

Next, the failure detection of the diode 121 will be described below. The control circuit 43 takes in the voltage Vd at the connection point 119 from the voltage detector circuit 141 besides the voltages Vc and Vs described above. At this time, since the voltage Vs has been taken in, both terminal voltages of the diode 121 have been able to be taken in.

In the failure detection processing of the control circuit 43D of Fig. 16, since the electric power is now being discharged from the electric storage unit 31, the diode 121 is in the ON state (at step S121). Therefore, the difference voltage Vs - Vd between the anode voltage (Vs) and the cathode voltage (Vd) of the diode 121 must be within the range of ΔV - δ to ΔV + δ in a manner similar to that of the fourth preferred embodiment. Based on this fact, the control circuit 43 judges the relation between the voltages Vs and Vd and the predetermined range of ΔV - δ to ΔV + δ. That is, the control circuit 43D detects and takes in the voltages Vs and Vd and judges whether or not the difference voltage Vs - Vd > ΔV + δ (at step S123) and whether or not the difference voltage Vs + Vd > ΔV + δ (at step S123).

If ΔV - δ ≤ Vs - Vd 5≤ ΔV + δ holds (No at step S123 and Yes at step S125), it can be judged that the diode 121 in the normal state (at step S127). If Vs - Vd > ΔV + δ (Yes at step S123), and this means that the difference between the voltage Vs and the voltage Vd is larger than the permissible range, the diode 121 is turned on and it can be judged that the "open-circuit failure" occurs (at step S126). Moreover, if Vs - Vd < ΔV - δ (Yes at step S125), the voltage Vs and the voltage Vd are close to each other, and therefore, it can be judged that the diode 121 suffers the "short-circuit failure" (at step S126).

As described above, according to the present preferred embodiment, the "open-circuit failure" of the switch 35 and the failure of the diode 121 are each detected, and the failure warning can be issued to the driver. By this operation, it can be distinguished whether either one of the switch 35 and the diode 121 fails or both of them fail, and therefore, serviceability at the time of repair is improved. It is noted that the failure detection of both of them may be performed simultaneously or individually in a random order.

With the above configuration and operation, the failure detection of the switch 35 and/or the diode 121 becomes possible, and a highly reliable electric storage apparatus 13D can be provided.

### MODIFIED PREFERRED EMBODIMENTS OF SECOND TO FIFTH PREFERRED EMBODIMENTS

In the above fourth preferred embodiment, only the "open-circuit failure" of the switch 35 can be detected. Therefore, the "short-circuit failure" of the switch 35 can be also detected by simultaneously performing the processing of the second preferred embodiment or the third preferred embodiment. In this case, failure detection due to the abnormal heat generation of the diode 121 can be also performed, and this leads to higher reliability and this allows the electric storage apparatus 13D for a vehicle to have an optimal configuration.

Although the electric double layer capacitor is employed as the electric storage device for the electric storage unit 31 in the above preferred embodiments, the present invention is not limited to this but allowed to employ another electric storage device such as an electrochemical capacitor. Furthermore, the electric storage unit 31 has the configuration in which the plurality of electric storage devices are connected in series. However, the present invention is not limited to this but allowed to employ a parallel connection or series and parallel connection or a single electric storage device in accordance with the electric power specifications that the accessory load 15 requires.

The case where the electric storage apparatuses 13A to 13D are applied to the idling stop car has been described in the above preferred embodiments. However, the present invention is not limited to this but allowed to be applied to a vehicle auxiliary power supply for the systems of hybrid cars, electric power steering, electric turbo, vehicle braking by electric hydraulic control, a general emergency backup power supply and the like.

### SIXTH PREFERRED EMBODIMENT

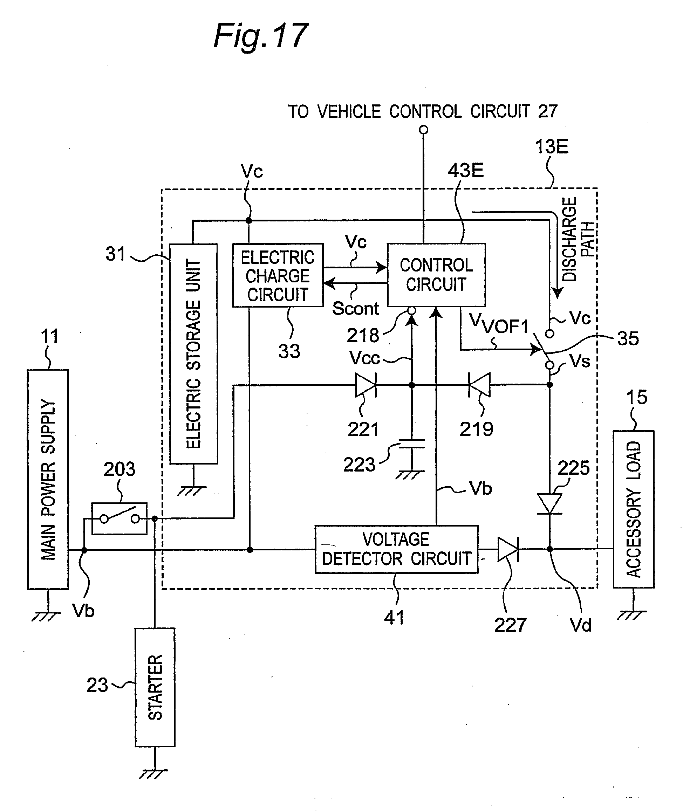

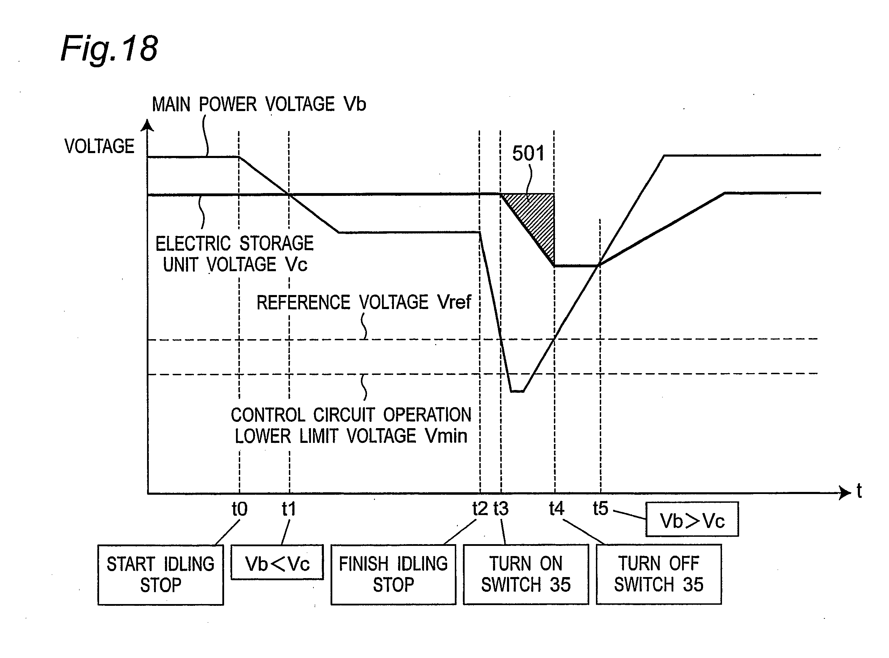

Fig. 17 is a block diagram showing a configuration of a vehicle power supply apparatus having an electric storage apparatus 13E according to the sixth preferred embodiment of the present invention. Fig. 18 shows an operation of the vehicle power supply apparatus of Fig. 17, and a timing chart showing changes in the voltages Vb, Vc, Vref and Vmin. In the present preferred embodiment, an example in which the vehicle power supply apparatus is used for an idling stop car will be described.

Referring to Fig. 17, an ignition switch 203 is connected to the main power supply 11 including a battery. The ignition switch 203 has the accessory mode, the ON mode and the start mode in a manner similar to that of the prior art and is connected in a manner similar to that of Fig. 22 of the prior art. With this arrangement, the starter 23 is driven when the driver turns on the ignition switch 203 to establish the start mode, and the engine of the vehicle can be started. The electric storage apparatus 13E that stores the electric power from the main power supply 11 is connected to the main power supply 11 and the ignition switch 203. The accessory load 15 including, for example, audio, navigation and other systems is connected to the output terminal of the electric storage apparatus 13E via a diode 225 described later.

Next, the detailed configuration of the electric storage apparatus 13E will be described below with reference to Fig. 17. Referring to Fig. 17, the main power supply 11 is connected to the accessory load 15 via the voltage detector circuit 41 that detects the voltage Vb of the main power supply 11 and connected also to the electric storage unit 31 via the electric charge circuit 33. It is noted that the electric charge circuit 33 has a function of detecting and outputting the voltage Vc of the electric storage unit 31. Moreover, the electric storage unit 31 is constituted by connecting a plurality of electric double layer capacitors. One terminal of the switch 35 is connected to the electric storage unit 31. The switch 35 switches over whether or not to supply the electric power from the electric storage unit 31 to the accessory load 15. The accessory load 15 is connected to the other terminal of the switch 35 via the diode 225. A control circuit 43E including a microcomputer is connected to the voltage detector circuit 41, the electric charge circuit 33 and the switch 35. Further, the control circuit 43E has a function of communicating data with a vehicle control circuit (not shown).

The electric storage unit 31 is connected to a power supply terminal 218 of the control circuit 43E via the switch 35 and a diode 219, while the main power supply 11 is connected via a diode 221 and the ignition switch 203. They are used as power supply sources. With this arrangement, the electric power is supplied from the main power supply 11 to the control circuit 43E. The diode 219 has its anode connected to the switch 35 so that the electric power from the main power supply 11 and the electric power from the electric storage unit 31 do not flow mutually reversely, and has its cathode connected to the power supply terminal 18. The diode 221 has its anode connected to the output of the ignition switch 203 and has its cathode connected to the power supply terminal 18.

In this case, when the control circuit 43E controls the switch 35 to switch the electric power supply source from the main power supply 11 to the electric storage unit 31, there is a possibility that the electric supply power to the control circuit 43E is instantly interrupted depending on the response speed of the switch 35. In order to avoid the stop of the control circuit 43E due to this, a capacitor 223 is connected to the power supply terminal 18. Moreover, when the voltage Vd of the accessory load 15 is larger than the voltage on the electric storage apparatus 13E side, there is a possibility that a reverse flow of the current occurs from the accessory load 15 to the electric storage apparatus 13E. In order to prevent this, the diode 225 and the diode 227 of which the cathode is connected to the accessory load 15 side are provided between the switch 35 and the accessory load 15 and between the voltage detector circuit 41 and the accessory load 15, respectively.

The operation of the vehicle power supply apparatus configured as above will be described below. First of all, when the driver turns on the ignition switch 203, the electric power from the main power supply 11 is supplied to the control circuit 43E via the ignition switch 203 and the diode 221. As a result, the control circuit 43E starts operation. Subsequently, the control circuit 43E transmits a control signal Scont to start the electric charge of the electric charge circuit 33. In response to this, the electric charge circuit 33 supplies the electric power from the main power supply 11 to the electric storage unit 31 to perform charge operation until reaching a specified voltage.

Next, the operation of supplying the electric power from the electric storage unit 31 to the accessory load 15 via the switch 35 at the time of the voltage drop of the main power supply 11 will be described with reference to Fig. 18. The horizontal axis of Fig. 18 represents time, and the vertical axis represents the voltage. In Fig. 18, the reference numeral 501 represents the electric power supplied from the electric storage unit 31 to the accessory load 15 and the control circuit 43E. Since the vehicle is in the normal state until reaching the timing t0, the engine is operating. Therefore, since the voltage Vb of the main power supply 11 is larger than the voltage Vc of the electric storage unit 31, the electric power from the main power supply 11 is supplied to the control circuit 43E. These voltages are monitored by being arbitrarily taken into the control circuit 43E by the voltage detector circuit 41 and the electric charge circuit 33.

Next, an alternator (not shown) also stops when the idling stop starts at the timing t0, and therefore, the voltage Vb drops as the time elapses. At this time, the electric storage unit 31 does not supply any power, and therefore, the voltage Vc maintains the full electric charge voltage. Next, it is assumed that the voltage Vb of the main power supply 11 drops below the voltage Vc of the electric storage unit 31 at the timing t1. At this time, the voltage Vb of the main power supply 11 is sufficiently larger than the reference voltage, and therefore, the electric power from the main power supply 11 can be continuously supplied to the accessory load 15. Therefore, the switch 35 remains turning off. Consequently, the electric power to the control circuit 43E is also supplied from the main power supply 11 via the diode 221, and therefore, the electric power from the electric storage unit 31 is not consumed. Subsequently, when the starter 23 starts up to start the engine after the idling stop is finished at the timing t2, the voltage Vb of the main power supply 11 begins to drop.

Further, when the voltage Vb of the main power supply 11 drops and drops below the reference voltage Vref at the timing t3, the control circuit 43E transmits an on/off signal Svon for turning on the switch 35. In response to this, the switch 35 is turned on, and the electric power is supplied from the electric storage unit 31 to the accessory load 15. As a result, the driving voltage Vcc is supplied also to the control circuit 43E via the diode 219. At this time, even if supplying of the electric power to the control circuit 43E described above is instantaneously interrupted, the electric power is supplied from the capacitor 223, and therefore, the control circuit 43E does not stop. With this arrangement, the electric power is first supplied from the electric storage unit 31 to the control circuit 43E at the timing t3, and therefore, wasteful electric power consumption of the prior art described with reference to Fig. 23 can be reduced during the timing t1 to t3. That is, the consumption of power energy corresponding to the area of the hatching portion 502 of Fig. 23 can be reduced.

Next, when the voltage Vb of the main power supply 11 rises due to the completion of engine startup or the like and becomes equal to or larger than the reference voltage Vref at the timing t4, the control circuit 43E transmits the on/off signal S_{VOF1} so as to turn off the switch 35. By this operation, the electric power supply source to the accessory load 15 is switched over to the main power supply 11. As a result, the electric power supply source to the control circuit 43E is also switched over to the main power supply 11. Furthermore, at the timing t5 when the voltage is raised, the voltage Vb of the main power supply 11 becomes larger than the voltage Vc of the electric storage unit 31, and therefore, the electric charge of the electric storage unit 31 is started. Since the switch 35 remains off at this time, the electric power is continuously supplied from the main power supply 11 to the control circuit 43E. By this operation, wasteful electric power consumption in a manner similar to that of the conventional case can be reduced even at the timing t4 to t5. That is, the consumption of power energy corresponding to the area of the hatching portion 503 of Fig. 23 can be reduced.

As apparent from these operations, the electric storage unit 31 consumes only the electric power energy of the area indicated by the hatching portion 501 of Fig. 18 during the timing t3 to t4, and the electric power energy consumption of the charge of the area indicated by the hatching portions 502 and 503 of Fig. 23 of the prior art can be reduced.

As described above, according to the present preferred embodiment, supplying of the electric power from the electric storage unit 31 to the control circuit 43E can be only performed in the period during which the switch 35 is turned on, and therefore, a vehicle power supply apparatus that reduces the wasteful electric power consumption can be provided.

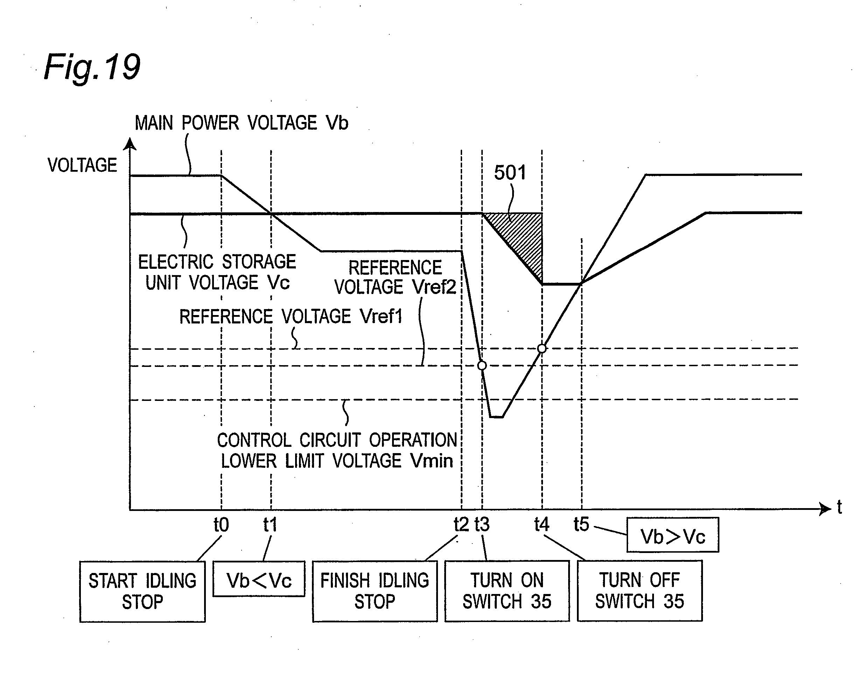

Fig. 19 shows an operation of a modified preferred embodiment of the vehicle power supply apparatus of Fig. 17, and a timing chart showing changes in the voltages Vb, Vc, Vref1, Vref2 and Vmin. The modified preferred embodiment shown in Fig. 19 is **characterized in that** two reference voltages Vref1 and Vref2 are provided in comparison with the operation of Fig. 18. In this case, the reference voltage at the timing t3 was set to Vref2 (< Vrefl), and the reference voltage at the timing t4 was set to Vref1. That is, the control circuit 43E turns on the switch 35 when the voltage Vb of the main power supply 11 is smaller than the reference voltage Vref2 and turns off the switch 35 when the voltage Vb of the main power supply 11 becomes equal to or larger than the reference voltage Vref1. Also, in this case, the electric power energy consumption of the charge in the areas of the hatching portions 502 and 503 of Fig. 23 of the prior art can be reduced in a manner similar to that of the present preferred embodiment.

Although the above sixth preferred embodiment has been described by using an idling stop car, the present invention is not limited to this but allowed to be used for vehicle systems of electric power steering, electric brake and so on. Moreover, although the configuration in which the plurality of electric double layer capacitors are connected as the electric storage unit 31 is shown in the sixth preferred embodiment, the present invention is not limited to this but allowed to employ another mass-storage capacitor such as an electrochemical capacitor.

### INDUSTRIAL APPLICABILITY

The vehicle power supply apparatus of the present invention, which is able to reduce the possibility of the driver's misconception of the failures and to obtain high reliability, is therefore useful as a vehicle power supply apparatus for an auxiliary power supply source to supply electric power from the electric storage unit at the time of voltage drop of the main power supply particularly in the idling stop car.

In addition, the vehicle power supply apparatus of the present invention, which performs failure detection of the switch and suppression of the abnormal heat generation of the diode and is able to obtain high reliability, is therefore useful as a vehicle power supply apparatus for an auxiliary power supply to supply electric power from the electric storage unit particularly at the time of the voltage drop of the main power supply.

Further, the vehicle power supply apparatus of the present invention, which is able to reduce the wasteful electric power consumption from the electric storage unit to the control circuit, is therefore useful as a vehicle power supply apparatus as an auxiliary power supply to supply electric power from the electric storage unit at the time of the voltage drop of the main power supply.

## Claims

1. A vehicle power supply apparatus comprising:
a main power supply (11);
an electric storage unit (31) for storing electric power from the main power supply (11);
a load (15) connected to the main power supply (11) and the electric storage unit (31); and
control means (27, 43) for controlling the electric storage unit (31) to supply the electric power from the electric storage unit (31) to the load (15) when a voltage (Vb) of the main power supply (11) becomes equal to or smaller than a predetermined threshold value,
**characterized in that**
the control means (27, 43) controls the electric storage unit (31) to inhibit supplying of the electric power from the electric storage unit (31) to the load (15), at least at the following times:
a) when the vehicle is not in use, and
b) when the electric power is supplied from the main power supply (11) to a starter (23) to start an engine of the vehicle, and an operation state of the vehicle power supply apparatus initially changes from a vehicle nonuse state when the vehicle is not in use to a vehicle startup state, and no electric power is supplied from the main power supply to the load (15).

2. The vehicle power supply apparatus as claimed in claim 1,
wherein the load (15) is an accessory load.

3. The vehicle power supply apparatus as claimed in claim 1 or 2, further comprising a vehicle power switch apparatus (19) for switching over a destination of supply of the electric power from the main power supply (11),
wherein the vehicle power switch apparatus (19) is configured to operate at the following operation modes:
a) a lock mode in which supplying of the electric power from the main power supply (11) to the electric storage unit (31) and the load (15) is stopped;
b) an accessory mode in which the electric power is supplied from the main power supply (11) to the load (15);
c) an ON mode in which the electric power is supplied from the main power supply (11) to the electric storage apparatus and the load (15); and
d) a start mode in which the electric power is supplied from the main power supply (11) to the starter (23),
wherein the vehicle power switch apparatus (19) includes an accessory mode switch (19a) for the accessory mode, and the accessory mode switch (19a) is turned on when the operation mode of the vehicle power switch apparatus (19) is switched over from the lock mode to the accessory mode, and the accessory mode switch (19a) is turned off during a time interval when the operation mode of the vehicle power switch apparatus (19) is switched over to the start mode, and
wherein the control means (27, 43) detects that the operation state of the vehicle power supply apparatus initially changes from the vehicle nonuse state to the vehicle startup state when the control means (27, 43) detects a voltage (Vac) of the load (15) supplied from the main power supply (11) via the accessory mode switch (19a) and the voltage (Vac) of the accessory load (15) becomes equal to or larger than the voltage (Vb) of the main power supply (11).

4. The vehicle power supply apparatus as claimed in claim 2 or 3,
wherein the control means (27, 43) outputs a predetermined malfunction signal when the voltage (Vac) of the load (15) is substantially zero for a time interval that is equal to or larger than a predetermined time interval.

5. The vehicle power supply apparatus as claimed in claim 2 or 3,
wherein the control means (27, 43) controls the electric storage unit (31) to inhibit supplying of the electric power from the electric storage unit (31) to the load (15) when the vehicle power switch apparatus (19) is switched over from the ON mode to the accessory mode or switched over from the ON mode to the lock mode.

6. The vehicle power supply apparatus as claimed in any one of claims 1 to 5,
wherein the control means (27, 43) outputs a disconnection signal when the supply voltage to the load (15) is substantially zero for a time interval that is equal to or larger than a predetermined time interval.

7. The vehicle power supply as claimed in claim 1, further comprising:
an electric charge circuit (33) connected between the main power supply (11) and the electric storage unit (31), the electric charge circuit (33) controlling electric charge from the main power supply (11) to the electric storage unit (31) while detecting a voltage (Vc) of the electric storage unit (31);
a first voltage detector circuit (41) connected between the main power supply (11) and the load (15), the first voltage detector circuit (41) detecting a voltage (Vb) of the main power supply (11);
a switch (35) connected between the electric storage unit (31) and the load (15), the switch (35) switching over whether or not to output the electric power from the electric storage unit (31) to the load (15);
a diode (121) having a cathode connected to a first connection point located between the first voltage detector circuit (41) and the load (15), and an anode connected to the switch (35);
a second voltage detector circuit (125) connected to a second connection point located between the switch (35) and the diode (39), the second voltage detector circuit (125) detecting a voltage (Vs) at the second connection point; and
further control means (43A) connected to the electric charge circuit (33), the first voltage detector circuit (41), the switch (35) and the second voltage detector circuit (29), the further control means (43A) controlling the switch (35),
wherein the further control means (43A) performs failure detection of the switch (35) by turning on and off the switch (35), under a predetermined condition, based on the voltage (Vc) of the electric storage unit (31) which is detected by the electric charge circuit (33), and the voltage (Vs) at the second connection point which is detected by the second voltage detector circuit (125) when the switch (35) is turned on and off, and
wherein the further control means (43A) judges and detects an abnormal heat generation state of the diode (121) when the voltage (Vs) at the second connection point becomes equal to or larger than an operating limit value of the diode (121) when the switch (35) is turned off.

8. The vehicle power supply apparatus as claimed in claim 7,
wherein the predetermined condition is such a case that is applied once for a time interval from a timing when the operation state of the electric storage apparatus changes from a nonuse state to a use state until a timing of full electric charge upon electrically charging the electric storage unit (31).

9. The vehicle power supply apparatus as claimed in claim 7 or 8,
wherein the further control means (43A) controls the electric storage unit (31) to stop the electric charge and discharge of the electric storage unit (31) upon detecting an abnormal heat generation state of the diode (121), and to restart the electric charge and discharge of the electric storage unit (31) when the voltage (Vs) at the second connection point becomes equal to or smaller than an operable value of the diode (121).

10. The vehicle power supply apparatus as claimed in claim 9,
wherein the operable value of the diode (121) is set to a value smaller than the operating limit value.

11. The vehicle power supply apparatus as claimed in any one of claims 7 to 9, further comprising cooling means (129) for cooling the diode (121),
wherein the further control means (43A, 43B) controls the electric storage unit (31), to operate the cooling means (129) when the abnormal heat generation state of the diode (121) is detected, and to stop the operation of the cooling means (129) when the voltage (Vs) at the second connection point becomes equal to or smaller than the operable value of the diode (121).

12. The vehicle power supply apparatus as claimed in claim 11,
wherein the operable value of the diode (121) is set to a value smaller than the operating limit value, and
wherein the further control means (43A, 43B) judges that the switch (35) suffers a short-circuit failure when the voltage (Vs) at the second connection point becomes equal to or larger than the operable value during the operation of the cooling means (129).

13. The vehicle power supply apparatus as claimed in claim 11 or 12,
wherein the cooling means (129) is a fan.

14. The vehicle power supply apparatus as claimed in claim 1, further comprising:
an electric charge circuit (33) connected between the main power supply (11) and the electric storage unit (31), the electric charge circuit (33) controlling electric charge from the main power supply (11) to the electric storage unit (31) while detecting a voltage (Vc) of the electric storage unit (31);
a first voltage detector circuit (41) connected between the main power supply (11) and the load (15), the first voltage detector circuit (41) detecting a voltage (Vb) of the main power supply (11);
a switch (35) connected between the electric storage unit (31) and the load (15), the switch (35) switching over whether or not to output the electric power from the electric storage unit (31) to the load (15);
a diode (121) having a cathode connected to a first connection point located between the first voltage detector circuit (30) and the load (15), and an anode connected to the switch (35);
a third voltage detector circuit (141) connected to the first connection point, the third voltage detector circuit (141) detecting a voltage (Vd) at the first connection point; and
further control means (43C) connected to the electric charge circuit (33), the first voltage detector circuit (41), the switch (35) and the third voltage detector circuit (141), the further control means (43C) controlling the switch (35),
wherein the further control means (43C) performs failure detection of at least one of the switch (35) and the diode (121) by turning on the switch (35), based on the voltage (Vc) of the electric storage unit (31) which is detected by the electric charge circuit (33) and the voltage (Vd) at the first connection point which is detected by the second voltage detector circuit (141), when electric discharge from the electric storage unit (31) to the load (15) is performed via the switch (35).

15. The vehicle power supply apparatus as claimed in claim 14, further comprising a second voltage detector circuit (125) connected to a second connection point located between the switch (35) and the diode (121), the second voltage detector circuit (125) detecting a voltage (Vs) at the second connection point,
wherein the further control means (43A, 43D) performs failure detection of the switch (35) and the diode (121) by turning on the switch (35), based on the voltage (Vc) of the electric storage unit (31) which is detected by the electric charge circuit (33), the voltage (Vd) at the first connection point which is detected by the third voltage detector circuit (141), and the voltage (Vs) at the second connection point which is detected by the second voltage detector circuit (125), when electric discharge from the electric storage unit (31) to the load (15) is performed via the switch (35).

16. The vehicle power supply apparatus as claimed in claim 1, further comprising:
a voltage detector circuit (41) connected to the main power supply (11), the voltage detector circuit (41) detecting a voltage (Vb) of the main power supply (11) ;
further control means (43E) for controlling the switch (35), based on the voltage (Vb) of the main power supply (11) which is detected by the voltage detector circuit (41);
a first diode (221) connected between the main power supply (11) and a power supply terminal of the further control means (43E), the first diode (221) supplying the electric power from the main power supply (11) to the further control means (43E); and
a second diode (219) connected between the power supply terminal of the further control means (43E) and the load (15), the second diode (219) supplying the electric power from the electric storage unit (31) to the further control means (43E) when the switch (35) is turned on,
wherein the further control means (43E) controls the switch (35), to supply the electric power from the electric storage unit (31) to the load (15), by turning on the switch (35) when the voltage (Vb) of the main power supply (11) which is detected by the voltage detector circuit (41) becomes smaller than a predetermined reference voltage (Vref), and to stop the supply of the electric power from the electric storage unit (31) to the load (15) by turning off the switch (35) when the voltage (Vb) of the main power supply (11) which is detected by the voltage detector circuit (41) becomes equal to or larger than the reference voltage (Vref).

17. The vehicle power supply apparatus as claimed in claim 16,
wherein the reference voltage (Vref) includes a first reference voltage (Vref1) and a second reference voltage (Vref2) smaller than the first reference voltage, and
wherein the further control means (43E) controls the switch (35), to supply the electric power from the electric storage unit (31) to the load (15) by turning on the switch (35) when the voltage (Vb) of the main power supply (11) which is detected by the voltage detector circuit (41) becomes smaller than the predetermined reference voltage (Vref2), and to stop supplying of the electric power from the electric storage unit (31) to the load (15) by turning off the switch (35) when the voltage (Vb) of the main power supply (11) which is detected by the voltage detector circuit (41) becomes equal to or larger than the reference voltage (Vref1).

## Patentansprüche

1. Fahrzeugenergieversorgungsvorrichtung, mit:
einer Hauptenergieversorgung (11),
einer elektrischen Speichereinheit (31) zum Speichern elektrischer Energie von der Hauptenergieversorgung (11),
einer Last (15), die mit der Hauptenergieversorgung (11) und der elektrischen Speichereinheit (31) verbunden ist, und
einem Steuermittel (27, 43) zum Steuern der elektrischen Speichereinheit (31) zum Zuführen der elektrischen Energie von der elektrischen Speichereinheit (31) zu der Last (15), wenn eine Spannung (Vb) der Hauptenergieversorgung (11) gleich oder geringer als ein vorbestimmter Schwellenwert wird,
**gekennzeichnet dadurch, dass**
das Steuermittel (27, 43) die elektrische Speichereinheit (31) zumindest während der folgenden Zeiten zum Unterbinden einer Zufuhr der elektrischen Energie von der elektrischen Speichereinheit (31) zu der Last (15) steuert:
a) wenn das Fahrzeug nicht in Benutzung ist und
b) wenn die elektrische Energie von der Hauptenergieversorgung (11) zu einem Anlasser (23) zum Starten des Motors des Fahrzeugs zugeführt wird und ein Betriebszustand der Fahrzeugenergieversorgungsvorrichtung initial von einem Fahrzeug-Nichtbenutzungszustand, in dem das Fahrzeug nicht in Benutzung ist, zu einem Vehikel-Startzustand wechselt, und keine elektrische Leistung von der Hauptenergieversorgung an die Last (15) zugeführt wird.

2. Fahrzeugenergieversorgungsvorrichtung nach Anspruch 1,
wobei die Last (15) eine Hilfslast ist.

3. Fahrzeugenergieversorgungsvorrichtung nach Anspruch 1 oder 2, ferner mit einer Fahrzeugenergieschaltvorrichtung (19) zum Umschalten eines Zuführziels der elektrischen Leistung von der Hauptenergieversorgung (11),
wobei die Fahrzeugenergieschaltvorrichtung (19) ausgestaltet ist, mit den folgenden Betriebsmodi betrieben zu werden:
a) einem Verschlussmodus, in dem Zuführen von elektrischer Energie von der Hauptenergieversorgung (11) an die elektrische Speichereinheit (31) und die Last (15) gestoppt ist,
b) einem Hilfsmodus, in dem die elektrische Leistung von der Hauptenergieversorgung (11) an die Last (15) gegeben wird,
c) einem Ein-Modus, in dem elektrische Leistung von der Hauptenergieversorgung (11) an die elektrische Speichervorrichtung und die Last (15) gegeben wird, und
d) einem Startmodus, bei die elektrische Leistung von der Hauptenergiequelle (11) an den Anlasser (23) gegeben wird,
wobei die Fahrzeugenergieschaltvorrichtung (19) einen Hilfsmodusschalter (19a) für den Hilfsmodus aufweist und der Hilfsmodusschalter (19a) eingeschaltet ist, wenn der Betriebsmodus der Fahrzeugenergieschaltvorrichtung (19) von dem Verschlussmodus in den Hilfsmodus umgeschaltet wird, und der Hilfsmodusschalter (19a) während eines Zeitintervalls ausgeschaltet ist, wenn der Betriebsmodus der Fahrzeugenergieschaltvorrichtung (19) zu dem Startmodus umgeschaltet wird, und
wobei das Steuermittel (27, 43) erfasst, dass der Betriebszustand der Fahrzeugenergieversorgungsvorrichtung initial von dem Fahrzeug-Nichtbenutzungszustand in den Fahrzeugstartzustand wechselt, wenn das Steuermittel (27, 43) eine Spannung (Vac) der Last (15) erfasst, die von der Hauptenergieversorgung (11) über den Hilfsmodusschalter (19a) zugeführt wird, und die Spannung (Vac) der Hilfslast (15) gleich oder größer wird als die Spannung (Vb) der Hauptenergieversorgung (11).

4. Fahrzeugenergieversorgungsvorrichtung nach Anspruch 2 oder 3,
wobei das Steuermittel (27, 43) ein vorbestimmtes Fehlfunktionssignal ausgibt, wenn die Spannung (Vac) der Last (15) im wesentlichen gleich Null für ein Zeitintervall ist, das gleich oder größer als ein vorbestimmtes Zeitintervall ist.

5. Fahrzeugenergieversorgungsvorrichtung nach Anspruch 2 oder 3,
wobei das Steuermittel (27, 43) die elektrische Speichereinheit (31) zum Verhindern einer Zuführung von elektrischer Energie von der elektrischen Speichereinheit (31) an die Last (15) steuert, wenn die Fahrzeugenergieschaltvorrichtung (19) von dem Ein-Modus zu dem Hilfsmodus oder von dem Ein-Modus in den Verschlussmodus umgeschaltet wird.

6. Fahrzeugenergieversorgungsvorrichtung nach einem der Ansprüche 1 bis 5,
wobei das Steuermittel (27, 43) ein Unterbrechungssignal ausgibt, wenn die Spannungsversorgung für die Last (15) im Wesentlichen gleich Null für ein Zeitintervall ist, das gleich oder größer als ein vorbestimmtes Zeitintervall ist.

7. Fahrzeugenergieversorgungsvorrichtung nach Anspruch 1, ferner mit:
einer elektrischen Ladungsschaltung (33), die zwischen der Hauptenergieversorgung (11) und der elektrischen Speichereinheit (31) verbunden ist, wobei die elektrische Ladungsschaltung (33) eine elektrische Ladung von der Hauptenergieversorgung (11) an die elektrische Speichereinheit (31) steuert, während eine Spannung (Vc) der elektrischen Speichereinheit (31) erfasst wird,
einer ersten Spannungserfassungsschaltung (41), die zwischen der Hauptenergieversorgung (11) und der Last (15) verbunden ist, wobei die erste Spannungserfassungsschaltung (41) eine Spannung (Vb) der Hauptenergieversorgung (11) erfasst,
einem Schalter (35), der zwischen der elektrischen Speichereinheit (31) und der Last (15) verbunden ist, wobei der Schalter (35) umschaltet, ob elektrische Energie von der elektrischen Speichereinheit (31) an die Last (15) ausgegeben wird,
einer Diode (121) mit einer Kathode, die mit einem ersten Verbindungspunkt verbunden ist, der zwischen der ersten Spannungserfassungsschaltung (41) und der Last (15) angeordnet ist, und einer Anode, die mit dem Schalter (35) verbunden ist,
einer zweiten Spannungserfassungsschaltung (125), die mit einem zweiten Verbindungspunkt verbunden ist, der zwischen dem Schalter (35) und der Diode (39) angeordnet ist, wobei die zweite Spannungserfassungsschaltung (125) eine Spannung (Vs) am zweiten Verbindungspunkt erfasst, und
einem weiteren Steuermittel (43A), das mit der elektrischen Ladungsschaltung (33) der ersten Spannungserfassungsschaltung (41), dem Schalter (35) und der zweiten Spannungserfassungsschaltung (29) verbunden ist, wobei das weitere Steuermittel (43A) den Schalter (35) steuert,
wobei das weitere Steuermittel (43A) unter einer vorbestimmten Bedingung eine Fehlererfassung des Schalters (35) durch Ein- und Ausschalten des Schalters (35) ausführt, auf Basis der Spannung (Vc) der elektrischen Speichereinheit (31), die durch die elektrische Ladungsschaltung (33) erfasst wird, und der Spannung (Vs) am zweiten Verbindungspunkt, die durch die zweite Spannungserfassungsschaltung (125) erfasst wird, wenn der Schalter (35) ein- und ausgeschaltet wird, und
wobei das weitere Steuermittel (43A) einen anormalen Wärmeerzeugungszustand der Diode (121) beurteilt und erfasst, wenn die Spannung (Vs) am zweiten Verbindungspunkt gleich oder größer als ein Betriebsgrenzwert der Diode (121) wird, wenn der Schalter (35) ausgeschaltet wird.

8. Fahrzeugenergieversorgungsvorrichtung nach Anspruch 7,
wobei die vorbestimmte Bedingung ein Fall ist, der einmal für ein Zeitintervall von einem Zeitpunkt, an dem der Betriebszustand der elektrischen Speichervorrichtung von einem Nichtbenutzungszustand in einen Benutzungszustand wechselt, bis zu einem Zeitpunkt einer vollen elektrischen Ladung beim elektrischen Laden der elektrischen Speichereinheit (31) auftritt.

9. Fahrzeugenergieversorgungsvorrichtung nach Anspruch 7 oder 8,
wobei das weitere Steuermittel (43A) die elektrische Speichereinheit (31) zum Beenden der elektrischen Ladung und zum Entladen der elektrischen Speichereinheit (31) beim Erfassen einer anormalen Wärmeerzeugungszustands der Diode (121) und zum Neustarten der elektrischen Ladung und Entladung der elektrischen Speichereinheit (31) steuert, wenn die Spannung (Vs) an dem zweiten Verbindungspunkt gleich oder geringer als ein Betriebswert der Diode (121) wird.

10. Fahrzeugenergieversorgungsvorrichtung nach Anspruch 9,
wobei der Betriebswert der Diode (121) auf einen Wert eingestellt ist, der geringer als der Betriebsgrenzwert ist.

11. Fahrzeugenergieversorgungsvorrichtung nach einem der Ansprüche 7 bis 9, ferner mit einem Kühlmittel (129) zum Kühlen der Diode (121),
wobei das weitere Steuermittel (43A, 43B) die elektrische Speichereinheit (31) zum Betreiben des Kühlmittels (129) steuert, wenn der anormale Wärmeerzeugungszustand der Diode (121) erfasst wird, und zum Beenden des Betriebs des Kühlmittels (129), wenn die Spannung (Vs) am zweiten Verbindungspunkt gleich oder geringer wird als der Betriebswert der Diode (121).

12. Fahrzeugenergieversorgungsvorrichtung nach Anspruch 11,
wobei der Betriebswert der Diode (121) auf einen Wert eingestellt ist, der geringer als der Betriebsgrenzwert ist, und
wobei das weitere Steuermittel (43A, 43B) beurteilt, dass der Schalter (35) ein Kurzschlussversagen erleidet, wenn die Spannung (Vs) am zweiten Verbindungspunkt während des Betriebs des Kühlmittels (129) gleich oder größer als der Betriebswert wird.

13. Fahrzeugenergieversorgungsvorrichtung nach Anspruch 11 oder 12,
wobei das Kühlmittel (129) ein Ventilator ist.

14. Fahrzeugenergieversorgungsvorrichtung nach Anspruch 1, ferner mit:
einer elektrischen Ladungsschaltung (33), die zwischen der Hauptenergieversorgung (11) und der elektrischen Speichereinheit (31) verbunden ist, wobei die elektrische Ladungsschaltung (33) eine elektrische Ladung von der Hauptenergieversorgung (11) an die elektrische Speichereinheit (31) steuert, während eine Spannung (Vc) der elektrischen Speichereinheit (31) erfasst wird,
einer ersten Spannungserfassungsschaltung (41), die zwischen der Hauptenergieversorgung (11) und der Last (15) verbunden ist, wobei die erste Spannungserfassungsschaltung (41) eine Spannung (Vb) der Hauptenergieversorgung (11) erfasst,
einem Schalter (35), der zwischen der elektrischen Speichereinheit (31) und der Last (15) verbunden ist, wobei der Schalter (35) umschaltet, ob elektrische Energie von der elektrischen Speichereinheit (31) an die Last (15) ausgegeben wird,
einer Diode (121) mit einer Kathode, die mit einem ersten Verbindungspunkt verbunden ist, der zwischen der ersten Spannungserfassungsschaltung (41) und der Last (15) angeordnet ist, und einer Anode, die mit dem Schalter (35) verbunden ist,
einer dritten Spannungserfassungsschaltung (141), die mit dem ersten Verbindungspunkt verbunden ist, wobei die dritte Spannungserfassungsschaltung (141) eine Spannung (Vd) am ersten Verbindungspunkt erfasst, und
einem weiteren Steuermittel (43C), das mit der elektrischen Ladungsschaltung (33) der ersten Spannungserfassungsschaltung (41), dem Schalter (35) und der dritten Spannungserfassungsschaltung (29) verbunden ist, wobei das weitere Steuermittel (43C) den Schalter (35) steuert,
wobei das weitere Steuermittel (43C) eine Fehlererfassung des Schalters (35) und/oder der Diode (121) durch Ein- und Ausschalten des Schalters (35) ausführt, auf Basis der Spannung (Vc) der elektrischen Speichereinheit (31), die durch die elektrische Ladungsschaltung (33) erfasst wird, und der Spannung (Vd) am ersten Verbindungspunkt, die durch die dritte Spannungserfassungsschaltung (125) erfasst wird, wenn eine elektrische Enthaltung von der elektrischen Speichereinheit (31) an die Last (15) über den Schalter (35) durchgeführt wird.

15. Fahrzeugenergieversorgungsvorrichtung nach Anspruch 14,
ferner mit einer zweiten Spannungserfassungsschaltung (125), die mit einem zweiten Verbindungspunkt verbunden ist, der zwischen dem Schalter (35) und der Diode (121) angeordnet ist, wobei die zweite Spannungserfassungsschaltung (125) eine Spannung (Vs) an dem zweiten Verbindungspunkt erfasst,
wobei das weitere Steuermittel (43A, 43D) eine Fehlererfassung des Schalters (35) und der Diode (121) durch Schalten des Schalters (35) durchführt, auf Basis der Spannung (Vc) der elektrischen Speichereinheit (31), die durch die elektrische Ladungsschaltung (33) erfasst wird, der Spannung (Vd) am ersten Verbindungspunkt, die durch die dritte Spannungserfassungsschaltung (141) erfasst wird, und die Spannung (Vs) am zweiten Verbindungspunkt, die durch die zweite Spannungserfassungsschaltung (125) erfasst wird, wenn eine elektrische Entladung von der elektrischen Speichereinheit (31) an die Last (15) über den Schalter (35) durchgeführt wird.

16. Fahrzeugenergieversorgungsvorrichtung nach Anspruch 1, ferner mit:
einer Spannungserfassungsschaltung (41), die mit der Hauptenergieversorgung (11) verbunden ist, wobei die Spannungserfassungsschaltung (41) eine Spannung (Vb) die Hauptenergieversorgung (11) erfasst,
einem weiteren Steuermittel (43E) zum Steuern des Schalters (35) auf Basis der Spannung (Vb) der Hauptenergieversorgung (11), die von der Spannungserfassungsschaltung (41) erfasst wird,
einer ersten Diode (221), die zwischen der Hauptenergieversorgung (11) und einem Energieversorgungsanschluss des weiteren Steuermittels (43E) verbunden ist, wobei die erste Diode (121) die elektrische Energie von der Hauptenergieversorgung (11) an das weitere Steuermittel (43E) liefert, und
einer zweiten Diode (219), die zwischen dem Energieversorgungsanschluss des weiteren Steuermittels (43E) und der Last (15) verbunden ist, wobei die zweite Diode (219) die elektrische Energie von der elektrischen Speichereinheit (31) an das weitere Steuermittel (43E) liefert, wenn der Schalter (35) eingeschaltet ist,
wobei das weitere Steuermittel (43E) den Schalter (35) durch Einschalten des Schalters (35) zum Zuführen der elektrischen Energie von der elektrischen Speichereinheit (31) an die Last (15) steuert, wenn die Spannung (Vb) der Hauptenergieversorgung (11), die durch die Spannungserfassungsschaltung (41) erfasst wird, geringer als eine vorbestimmte Referenzspannung (Vref) wird, und durch Ausschalten des Schalters (35) zum Beenden der Zufuhr von elektrischer Energie von der elektrischen Speichereinheit (31) an die Last (15) steuert, wenn die Spannung (Vb) der Hauptenergieversorgung (11), die durch die Spannungserfassungsschaltung (41) erfasst wird, gleich oder größer als die Referenzspannung (Vref) wird.

17. Fahrzeugenergieversorgungsvorrichtung nach Anspruch 16,
wobei die Referenzspannung (Vref) eine erste Referenzspannung (Vref1) und eine zweite Referenzspannung (Vref2) umfasst, die kleiner als die erste Referenzspannung ist, und
wobei das weitere Steuermittel (43E) den Schalter (35) durch Einschalten des Schalters (35) zum Zuführen der elektrischen Energie von der elektrischen Speichereinheit (31) an die Last (15) steuert, wenn die Spannung (Vb) der Hauptenergieversorgung (11), die durch die Spannungserfassungsschaltung (41) erfasst wird, geringer als eine vorbestimmte Referenzspannung (Vref2) wird, und durch Ausschalten des Schalters (35) zum Beenden der Zufuhr von elektrischer Energie von der elektrischen Speichereinheit (31) an die Last (15) steuert, wenn die Spannung (Vb) der Hauptenergieversorgung (11), die durch die Spannungserfassungsschaltung (41) erfasst wird, gleich oder größer als die Referenzspannung (Vref1) wird.

## Revendications

1. Appareil d'alimentation électrique de véhicule comprenant :
une source d'alimentation principale (11) ;
une unité de stockage électrique (31) destinée à stocker la puissance électrique à partir de la source d'alimentation principale (11) ;
une charge (15) connectée à la source d'alimentation principale (11) et à l'unité de stockage électrique (31) ; et
un moyen de commande (27, 43) destiné à commander l'unité de stockage électrique (31) pour alimenter la puissance électrique à partir de l'unité de stockage électrique (31) à la charge (15) lorsqu'une tension (Vb) de la source d'alimentation principale (11) devient inférieure ou égale à une valeur seuil prédéterminée,
**caractérisé en ce que**
le moyen de commande (27, 43) commande l'unité de stockage électrique (31) pour empêcher l'alimentation de la puissance électrique à partir de l'unité de stockage électrique (31) à la charge (15), au moins aux moments suivants :
a) lorsque le véhicule n'est pas en cours d'utilisation, et
b) lorsque la puissance électrique est alimentée à partir de la source d'alimentation principale (11) à un démarreur (23) pour démarrer un moteur du véhicule, et un état de fonctionnement de l'appareil d'alimentation électrique de véhicule passe initialement d'un état de non-utilisation de véhicule lorsque le véhicule n'est pas en cours d'utilisation à un état de démarrage de véhicule, et aucune puissance électrique n'est alimentée à partir de la source d'alimentation principale à la charge (15).

2. Appareil d'alimentation électrique de véhicule tel que revendiqué dans la revendication 1, dans lequel la charge (15) est une charge auxiliaire.

3. Appareil d'alimentation électrique de véhicule tel que revendiqué dans la revendication 1 ou 2, comprenant en outre un appareil de commutation de puissance de véhicule (19) pour commuter une destination d'alimentation de la puissance électrique à partir de la source d'alimentation principale (11),
dans lequel l'appareil de commutation de puissance de véhicule (19) est configuré pour fonctionner aux modes de fonctionnement suivants :
a) un mode de verrouillage dans lequel l'alimentation de la puissance électrique à partir de la source d'alimentation principale (11) à l'unité de stockage électrique (31) et à la charge (15) est arrêtée ;
b) un mode auxiliaire dans lequel la puissance électrique est alimentée à partir de la source d'alimentation principale (11) à la charge (15) ;
c) un mode allumé dans lequel la puissance électrique est alimentée à partir de la source d'alimentation principale (11) à l'appareil de stockage électrique et à la charge (15) ; et
d) un mode de démarrage dans lequel la puissance électrique est alimentée à partir de la source d'alimentation principale (11) au démarreur (23),
dans lequel l'appareil de commutation de puissance de véhicule (19) comporte un commutateur de mode auxiliaire (19a) pour le mode auxiliaire, et le commutateur de mode auxiliaire (19a) est mis en position de marche lorsque le mode de fonctionnement de l'appareil de commutation de puissance de véhicule (19) est commuté du mode de verrouillage au mode auxiliaire, et le commutateur de mode auxiliaire (19a) est mis en position d'arrêt pendant un intervalle de temps lorsque le mode de fonctionnement de l'appareil de commutation de puissance de véhicule (19) est commuté au mode de démarrage, et
dans lequel le moyen de commande (27, 43) détecte que l'état de fonctionnement de l'appareil d'alimentation électrique de véhicule passe initialement de l'état de non-utilisation de véhicule à l'état de démarrage de véhicule lorsque le moyen de commande (27, 43) détecte une tension (Vac) de la charge (15) alimentée à partir de la source d'alimentation principale (11) via le commutateur de mode auxiliaire (19a) et la tension (Vac) de la charge auxiliaire (15) devient supérieure ou égale à la tension (Vb) de la source d'alimentation principale (11).

4. Appareil d'alimentation électrique de véhicule tel que revendiqué dans la revendication 2 ou 3,
dans lequel le moyen de commande (27, 43) délivre en sortie un signal de défaut de fonctionnement prédéterminé lorsque la tension (Vac) de la charge (15) est essentiellement égale à zéro pendant un intervalle de temps qui est supérieur ou égal à un intervalle de temps prédéterminé.

5. Appareil d'alimentation électrique de véhicule tel que revendiqué dans la revendication 2 ou 3,
dans lequel le moyen de commande (27, 43) commande l'unité de stockage électrique (31) pour empêcher l'alimentation de la puissance électrique à partir de l'unité de stockage électrique (31) à la charge (15) lorsque l'appareil de commutation de puissance de véhicule (19) est commuté du mode allumé au mode auxiliaire ou commuté du mode allumé au mode de verrouillage.

6. Appareil d'alimentation électrique de véhicule tel que revendiqué dans l'une quelconque des revendications 1 à 5,
dans lequel le moyen de commande (27, 43) délivre en sortie un signal de coupure lorsque la tension d'alimentation à la charge (15) est essentiellement égale à zéro pendant un intervalle de temps qui est supérieur ou égal à un intervalle de temps prédéterminé.

7. Appareil d'alimentation électrique de véhicule tel que revendiqué dans la revendication 1, comprenant en outre :
un circuit de charge électrique (33) connecté entre la source d'alimentation principale (11) et l'unité de stockage électrique (31), le circuit de charge électrique (33) commandant une charge électrique à partir de la source d'alimentation principale (11) à l'unité de stockage électrique (31) lors de la détection d'une tension (Vc) de l'unité de stockage électrique (31) ;
un premier circuit de détection de tension (41) connecté entre la source d'alimentation principale (11) et la charge (15), le premier circuit de détection de tension (41) détectant une tension (Vb) de la source d'alimentation principale (11) ;
un commutateur (35) connecté entre l'unité de stockage électrique (31) et la charge (15), le commutateur (35) effectuant une commutation selon que la puissance électrique est délivrée ou non en sortie à partir de l'unité de stockage électrique (31) à la charge (15) ;
une diode (121) ayant une cathode connectée à un premier point de connexion situé entre le premier circuit de détection de tension (41) et la charge (15), et une anode connectée au commutateur (35) ;
un deuxième circuit de détection de tension (125) connecté à un deuxième point de connexion situé entre le commutateur (35) et la diode (39), le deuxième circuit de détection de tension (125) détectant une tension (Vs) au niveau du deuxième point de connexion ; et
un moyen de commande supplémentaire (43A) connecté au circuit de charge électrique (33), au premier circuit de détection de tension (41), au commutateur (35) et au deuxième circuit de détection de tension (29), le moyen de commande supplémentaire (43A) commandant le commutateur (35),
dans lequel le moyen de commande supplémentaire (43A) effectue une détection de défaillance du commutateur (35) en mettant en positon de marche et en positon d'arrêt le commutateur (35), dans une condition prédéterminée, sur la base de la tension (Vc) de l'unité de stockage électrique (31) qui est détectée par le circuit de charge électrique (33), et la tension (Vs) au niveau du deuxième point de connexion qui est détectée par le deuxième circuit de détection de tension (125) lorsque le commutateur (35) est mis en position de marche et en position d'arrêt, et
dans lequel le moyen de commande supplémentaire (43A) juge et détecte un état de génération de chaleur anormal de la diode (121) lorsque la tension (Vs) au niveau du deuxième point de connexion devient supérieure ou égale à une valeur limite de fonctionnement de la diode (121) lorsque de le commutateur (35) est mis en position d'arrêt.

8. Appareil d'alimentation électrique de véhicule tel que revendiqué dans la revendication 7,
dans lequel la condition prédéterminée constitue un cas telle qu'elle est appliquée une fois pendant un intervalle de temps à partir d'une synchronisation lorsque l'état de fonctionnement de l'appareil de stockage électrique passe d'un état de non-utilisation à un état d'utilisation jusqu'à une synchronisation de la charge électrique totale lors de la charge électrique de l'unité de stockage électrique (31).

9. Appareil d'alimentation électrique de véhicule tel que revendiqué dans la revendication 7 ou 8,
dans lequel le moyen de commande supplémentaire (43A) commande l'unité de stockage électrique (31) pour arrêter la charge et la décharge électriques de l'unité de stockage électrique (31) lors de la détection d'un état de génération de chaleur anormal de la diode (121), et pour redémarrer la charge et la décharge électriques de l'unité de stockage électrique (31) lorsque la tension (Vs) au niveau du deuxième point de connexion devient inférieure ou égale à une valeur de fonctionnement de la diode (121).

10. Appareil d'alimentation électrique de véhicule tel que revendiqué dans la revendication 9,
dans lequel la valeur de fonctionnement de la diode (121) est réglée à une valeur inférieure à la valeur limite de fonctionnement.

11. Appareil d'alimentation électrique de véhicule tel que revendiqué dans l'une quelconque des revendications 7 à 9, comprenant en outre un moyen de refroidissement (129) pour refroidir la diode (121),
dans lequel le moyen de commande supplémentaire (43A, 43B) commande l'unité de stockage électrique (31), pour actionner le moyen de refroidissement (129) lorsque l'état de génération de chaleur anormal de la diode (121) est détecté, et pour arrêter le fonctionnement du moyen de refroidissement (129) lorsque la tension (Vs) au niveau du deuxième point de connexion devient inférieure ou égale à la valeur de fonctionnement de la diode (121).

12. Appareil d'alimentation électrique de véhicule tel que revendiqué dans la revendication 11,
dans lequel la valeur de fonctionnement de la diode (121) est réglée à une valeur inférieure à la valeur limite de fonctionnement, et
dans lequel le moyen de commande supplémentaire (43A, 43B) juge que le commutateur (35) subit une défaillance de court-circuit lorsque la tension (Vs) au niveau du deuxième point de connexion devient supérieure ou égale à la valeur de fonctionnement pendant le fonctionnement du moyen de refroidissement (129).

13. Appareil d'alimentation électrique de véhicule tel que revendiqué dans la revendication 11 ou 12,
dans lequel le moyen de refroidissement (129) est un ventilateur.

14. Appareil d'alimentation électrique de véhicule tel que revendiqué dans la revendication 1, comprenant en outre :
un circuit de charge électrique (33) connecté entre la source d'alimentation principale (11) et l'unité de stockage électrique (31), le circuit de charge électrique (33) commandant une charge électrique à partir de la source d'alimentation principale (11) à l'unité de stockage électrique (31) lors de la détection d'une tension (Vc) de l'unité de stockage électrique (31) ;
un premier circuit de détection de tension (41) connecté entre la source d'alimentation principale (11) et la charge (15), le premier circuit de détection de tension (41) détectant une tension (Vb) de la source d'alimentation principale (11) ;
un commutateur (35) connecté entre l'unité de stockage électrique (31) et la charge (15), le commutateur (35) effectuant une commutation selon que la puissance électrique est délivrée ou non en sortie à partir de l'unité de stockage électrique (31) à la charge (15) ;
une diode (121) ayant une cathode connectée à un premier point de connexion situé entre le premier circuit de détection de tension (30) et la charge (15), et une anode connectée au commutateur (35) ;
un troisième circuit de détection de tension (141) connecté au premier point de connexion, le troisième circuit de détection de tension (141) détectant une tension (Vd) au niveau du premier point de connexion ; et
un moyen de commande supplémentaire (43C) connecté au circuit de charge électrique (33), au premier circuit de détection de tension (41), au commutateur (35) et au troisième circuit de détection de tension (141), le moyen de commande supplémentaire (43C) commandant le commutateur (35),
dans lequel le moyen de commande supplémentaire (43C) effectue une détection de défaillance d'au moins l'un(e) du commutateur (35) et de la diode (121) en mettant en position de marche le commutateur (35), sur la base de la tension (Vc) de l'unité de stockage électrique (31) qui est détectée par le circuit de charge électrique (33) et la tension (Vd) au niveau du premier point de connexion qui est détectée par le deuxième circuit de détection de tension (141), lorsque la décharge électrique à partir de l'unité de stockage électrique (31) à la charge (15) est effectuée par l'intermédiaire du commutateur (35).

15. Appareil d'alimentation électrique de véhicule tel que revendiqué dans la revendication 14, comprenant en outre un deuxième circuit de détection de tension (125) connecté à un deuxième point de connexion situé entre le commutateur (35) et la diode (121), le deuxième circuit de détection de tension (125) détectant une tension (Vs) au niveau du deuxième point de connexion,
dans lequel le moyen de commande supplémentaire (43A, 43D) effectue une détection de défaillance du commutateur (35) et de la diode (121) en mettant en position de marche le commutateur (35), sur la base de la tension (Vc) de l'unité de stockage électrique (31) qui est détectée par le circuit de charge électrique (33), la tension (Vd) au niveau du premier point de connexion qui est détectée par le troisième circuit de détection de tension (141), et la tension (Vs) au niveau du deuxième point de connexion qui est détectée par le deuxième circuit de détection de tension (125), lorsque la décharge électrique à partir de l'unité de stockage électrique (31) à la charge (15) est effectuée par l'intermédiaire du commutateur (35).

16. Appareil d'alimentation électrique de véhicule tel que revendiqué dans la revendication 1, comprenant en outre :
un circuit de détection de tension (41) connecté à la source d'alimentation principale (11), le circuit de détection de tension (41) détectant une tension (Vb) de la source d'alimentation principale (11) ;
un moyen de commande supplémentaire (43E) pour commander le commutateur (35), sur la base de la tension (Vb) de la source d'alimentation principale (11) qui est détectée par le circuit de détection de tension (41) ;
une première diode (221) connectée entre la source d'alimentation principale (11) et une borne d'alimentation électrique du moyen de commande supplémentaire (43E), la première diode (221) alimentant la puissance électrique à partir de la source d'alimentation principale (11) au moyen de commande supplémentaire (43E) ; et
une deuxième diode (219) connectée entre la borne d'alimentation électrique du moyen de commande supplémentaire (43E) et la charge (15), la deuxième diode (219) alimentant la puissance électrique à partir de l'unité de stockage électrique (31) au moyen de commande supplémentaire (43E) lorsque le commutateur (35) est mis en position de marche,
dans lequel le moyen de commande supplémentaire (43E) commande le commutateur (35), pour alimenter la puissance électrique à partir de l'unité de stockage électrique (31) à la charge (15), en mettant en position de marche le commutateur (35) lorsque la tension (Vb) de la source d'alimentation principale (11) qui est détectée par le circuit de détection de tension (41) devient inférieure à une tension de référence prédéterminée (Vref), et pour arrêter l'alimentation de la puissance électrique à partir de l'unité de stockage électrique (31) à la charge (15) en mettant en position d'arrêt le commutateur (35) lorsque la tension (Vb) de la source d'alimentation principale (11) qui est détectée par le circuit de détection de tension (41) devient supérieure ou égale à la tension de référence (Vref).

17. Appareil d'alimentation électrique de véhicule tel que revendiqué dans la revendication 16,
dans lequel la tension de référence (Vref) comporte une première tension de référence (Vref1) et une deuxième tension de référence (Vref2) inférieure à la première tension de référence, et
dans lequel le moyen de commande supplémentaire (43E) commande le commutateur (35), pour alimenter la puissance électrique à partir de l'unité de stockage électrique (31) à la charge (15) en mettant en position de marche le commutateur (35) lorsque la tension (Vb) de la source d'alimentation principale (11) qui est détectée par le circuit de détection de tension (41) devient inférieure à la tension de référence prédéterminée (Vref2), et pour arrêter l'alimentation de la puissance électrique à partir de l'unité de stockage électrique (31) à la charge (15) en mettant de position d'arrêt le commutateur (35) lorsque la tension (Vb) de la source d'alimentation principale (11) qui est détectée par le circuit de détection de tension (41) devient supérieure ou égale à la tension de référence (Vref1).
